# EUROPEAN PATENT SPECIFICATION

(11) **EP 4 343 651 B1**
(45) Date of publication and mention of the grant of the patent: **30.09.2026**
(21) Application number: 23192752.6
(22) Date of filing: 22.08.2023
(51) Int. Cl.: G06Q 10/087, G06Q 10/04

(54) **METHOD AND SYSTEM FOR PREDICTING SHELF LIFE OF PERISHABLE FOOD ITEMS**
VERFAHREN UND SYSTEM ZUR VORHERSAGE DER HALTBARKEIT VERDERBLICHER LEBENSMITTELARTIKEL
PROCÉDÉ ET SYSTÈME DE PRÉDICTION DE LA DURÉE DE CONSERVATION D'ARTICLES ALIMENTAIRES PÉRISSABLES

(30) Priority: 21.09.2022 IN 202221054032
(43) Date of publication of application: 27.03.2024
(73) Proprietor: Tata Consultancy Services Limited, Maharashtra (IN)
(72) Inventor: KEDIA, PRIYA, 411013 Pune (IN); KAUSLEY, SHANKAR, 411013 Pune (IN); PATWARDHAN, MANASI SAMARTH, 411013 Pune (IN); KARANDE, SHIRISH SUBHASH, 411013 Pune (IN); RAI, BEENA, 411013 Pune (IN); DUTTA, JAYITA, 411013 Pune (IN); DESHPANDE, PARIJAT, 411013 Pune (IN); SRIRAMAN, ANAND, 411013 Pune (IN); KAPSE, SHRIKANT ARJUNRAO, 411013 Pune (IN)
(74) Representative: Goddar, Heinz J.

(56) References cited:
- US-A1- 2016 196 527
- US-A1- 2018 285 894
- US-A1- 2019 147 396
- US-A1- 2020 302 377

## Description

### CROSS-REFERENCE TO RELATED APPLICATIONS AND PRIORITY

The present application claims priority to Indian application no. 202221054032, filed on September 21, 2022**.**

### TECHNICAL FIELD

The disclosure herein generally relates to prediction, and, more particularly, to method and system for predicting shelf life of perishable food items.

### BACKGROUND

Consumers are increasingly demanding high food quality during the period between purchase and consumption. There is a synergistic effect in maintaining the quality of perishable products and market progress. One of the major challenges faced by the food industry is maintaining and monitoring the quality of perishable foods and storage factors plays a major role. Shelf life of food items is an important feature for both manufacturers and consumers for maintaining the quality of food. Shelf life provides important information to manufacturers and consumers ensuring high quality product during the storage period and knowledge of shelf life is essential during segregation of food for sale, pricing, and thereof. Shelf life of any food item is dependent upon one or more storage conditions that includes a temperature, a relative humidity, a gas concentration, and thereof.

Conventional methods provides prediction of shelf life of food item based on visual features using one or more sensory signals. Most of the image-based models allow detecting defects, grading or sorting of food. These models do not allow shelf life prediction or estimation of quality of food in terms of numerical continuous parameter. Most of the image-based models correlate visual features of food item with its corresponding quality parameter based on only discrete values such as ripening index having ranking values and such approaches lacks in correlating food image with continuous numerical parameters in real time. Also, most of the available methods provide information on quality or freshness of a food at only specific particular storage condition when used for model development. Such methods lack identifying freshness of food item when storage conditions are varied during the supply chain and a model capturing effect of storage condition is a necessity. Document US 2019/147396 A1 discloses examples that provide for a freshness indicator and shelf life prediction system. Product-specific data is obtained for a product and an environment associated with the product from various information sources and sensors. The obtained product-specific data is used to calculate freshness indicator values for a given product. The calculated freshness indicator values are used to calculate a shelf life prediction for the given product. (Abstract). Document US 2016/196527 A1 discloses techniques for condition monitoring and prediction. According to embodiments described herein one or more computing devices receive a set of sensor data from a set of sensors. The sensor data identifies a condition associated with at least one mobile item moving through a particular geographic region and route that correspond to at least one cell in a transportation network representation. The one or more computing devices determine, from the sensor data, a correlation between the condition associated with the at least one mobile item and a set of one or more other conditions that are associated with the at least one cell in the route. The one or more computing device generate, based, at least in part, on the correlation, a prediction of a quality of service for the particular item that is associated with the route including the particular geographic region and corresponding to at least one cell in the transportation network representation. (Abstract). Document US 2020/302377 A1 discloses an approach for using a machine learning model to reduce food waste. Estimation models for food items are created by using a machine learning model. The estimation models have prediction functions specifying timelines during which the food items are not spoiled and are in a condition for consumption. Prediction function solutions are generated for a food item inventory to indicate menu items for respective time periods. Each menu item includes food item(s) which are in condition for consumption based on the estimation models. Menu recommendations corresponding to the time periods are generated. Each menu includes menu item(s) indicated by the prediction function solutions. The menu recommendations reduce a waste of the food items through spoilage by increasing a likelihood of consumption of the food items within the respective timelines. (Abstract). Document US 2018/285894 A1 discloses system for real time marketing of perishable commodities, for example food. The system comprises quality sensors (103) for obtaining information related to quality of the perishable commodities, a sale monitoring system (104) for producing sale monitoring data indicative of consumer demand of the perishable commodities, and a processing and data transfer system (105) for producing quality indicator data on the basis of the information obtained with the quality sensors. The processing and data transfer system is configured to determine selling prices of the perishable commodities in accordance with at least the quality indicator data and the sale monitoring data so that a weakening in the quality tends to decrease a selling price whereas an increase in the consumer demand tends to increase the selling price. Thus, the portion of the perishable commodities which remain unsold can be reduced without excessively sacrificing the price level. (Abstract)

### SUMMARY

Embodiments of the present disclosure present technological improvements as solutions to one or more of the above-mentioned technical problems recognized by the inventors in conventional systems., In one embodiment, a system for predicting shelf life of perishable food items is disclosed in appended set of system claims.

In another aspect, a method for predicting shelf life of perishable food items is disclosed in appended set of method claims.

In yet another aspect, a non-transitory computer readable medium is disclosed in appended set of computer readable medium claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates an exemplary block diagram of a system (alternatively referred to as shelf life prediction system) for predicting shelf life of perishable food item, in accordance with some embodiments of the present disclosure.
FIG.2 is a schematic overview of the shelf life prediction system to predict shelf life of perishable food items, in accordance with some embodiments of the present disclosure.
FIG.3 illustrates an example flow diagram depicting a method for predicting shelf life using a shelf life prediction module using the system of FIG.1, in accordance with some embodiments of the present disclosure.
FIG.4 illustrates an example visual data of potatoes showing ageing analysis when stored at specific value of storage factors using the system of FIG.1, in accordance with some embodiments of the present disclosure.
FIG.5 illustrates an example table showing visual data annotated with corresponding quality parameter value depicting weight loss percent of food item (potatoes) when stored at specific value of storage factors using the system of FIG.1, in accordance with some embodiments of the present disclosure.
FIG.6A and FIG.6B illustrates an example sample visual data of food item potatoes for each class of multi-class models of different class size using the system of FIG.1, in accordance with some embodiments of the present disclosure.
FIG.7 illustrates a classification accuracy for the plurality of multi-class models with different number of classes and class size when example food item (potatoes) are stored at a particular storage factor values using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

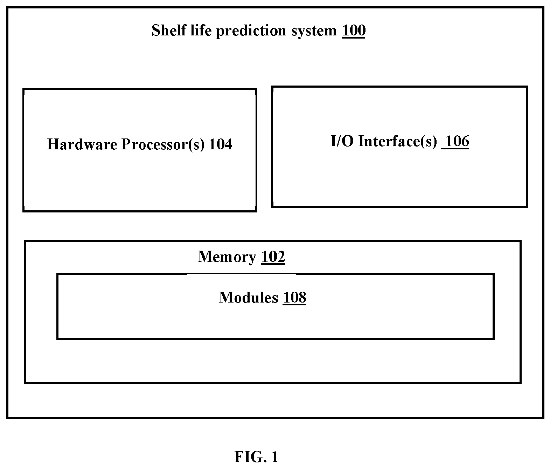

Embodiments herein provide a method and system for predicting shelf life of perishable food items. The method disclosed, enables to predict shelf life of perishable food items at a plurality of storage factors. For any food item, relationship between a quality parameter and visual features of the food item at each storage factor may vary. The disclosed method determines the quality parameter value of the food item for the corresponding storage factors and predicts accurate shelf life based on the quality parameter value. The system 100 comprises a quality parameter prediction module and a shelf prediction module. The quality parameter prediction module comprises a plurality of pretrained module and the shelf life prediction module benefits in predicting accuracy of food item based on visual data and providing applicability by dividing the whole horizon of a plurality of storage factors into a plurality of weather zones. Here, each weather zone includes a cluster of storage factor range values categorized for each food item. The storage factor range values of weather zones are determined based on a set of predefined rules. Further, the method of the present disclosure enables predicting shelf life of each food item stored at desired storage factor values such as temperature, relative humidity, gas concentration and thereof using the visual data. The disclosed method facilitates identifying each weather zone in the whole range of values for storage factors where a similar relationship between the visual data and a biochemical parameter of the given food item exists and a single machine learning model. The disclosed system is further explained with the method as described in conjunction with FIG.1 to FIG.7 below.

Referring now to the drawings, and more particularly to FIG.1 through FIG.7, where similar reference characters denote corresponding features consistently throughout the figures, there are shown preferred embodiments and these embodiments are described in the context of the following exemplary system and/or method.

FIG.1 illustrates an exemplary block diagram of a system (alternatively referred to as shelf life prediction system 100) for predicting shelf life of perishable food item, in accordance with some embodiments of the present disclosure. In an embodiment, the shelf life prediction system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

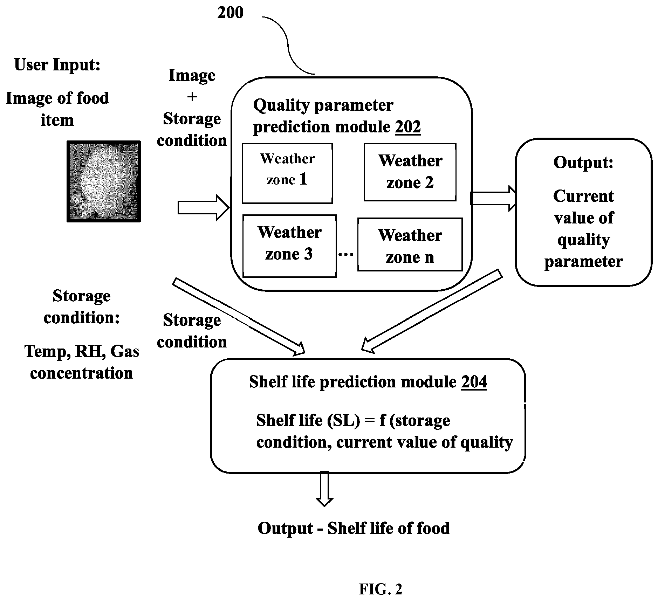

FIG.2 is a schematic overview of the shelf life prediction system 100 to predict shelf life of perishable food items, in accordance with some embodiments of the present disclosure. The FIG.2 includes a plurality of modules comprising a quality parameter prediction module 202, and a shelf life prediction module 204.

The system 100 receives a visual data of food item and a storage data from one or more users as input for predicting shelf life. The visual data comprises characteristics indicative of freshness of each food item. The storage data comprises values specified by the user indicating storage environment of each food item being stored.

The quality parameter prediction module 202 of the system 100 comprises an ensemble of pretrained module corresponding to a plurality of weather zones. Each weather zone has a machine learning model which comprises a plurality of classes and each class has a range of quality parameter values depicting different life cycle stages of each food item. The quality parameter prediction module 202 is trained with training visual data with corresponding quality parameter data obtained from storing perishable food items at different storage factor values. The quality parameter value for the corresponding food item is identified and prestored in a database comprised in the memory 102. The quality parameter includes at least one of a biochemical compound or a physical variable which undergoes change during ageing or during spoilage of food item. For example, the biochemical compound may include at least one of vitamin C, antioxidant, carbohydrates, and thereof. The physical parameters includes one or more dimensions, an aspect ratio, and thereof.

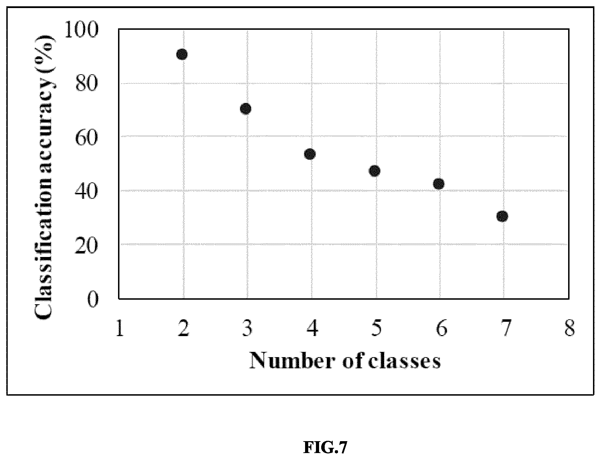

The shelf life prediction module 204 of the system 100 is pretrained to predict shelf life of perishable food items based on the quality parameter value obtained from the quality parameter prediction module 202 and a critical parameter. The present disclosure is further explained considering an example, where the system 100 predicts the shelf life of perishable food item using the system of FIG. 1 and FIG.7.

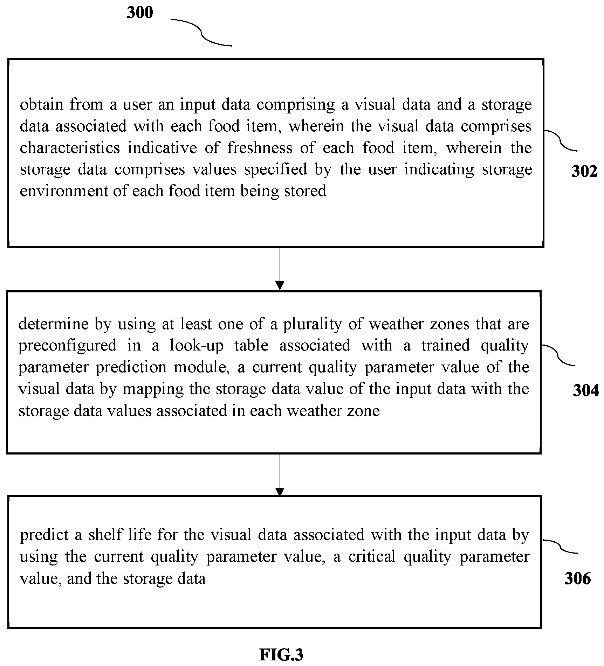

FIG.3 illustrates an example flow diagram depicting a method for predicting shelf life of food item using a quality parameter prediction module using the system of FIG.1, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.1 and FIG.7 and the steps of flow diagram as depicted in FIG.3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 obtain from a user an input data comprising a visual data and a storage data associated with each food item. The visual data of the input data represents characteristics indicative of freshness of each food item. The storage data specifies values indicating storage environment of each food item being stored. For example, one or more user feeds the input data to the system 100 to predict the shelf life of the food item. The system 100 initially obtains characteristic freshness of the food item based on the visual data. Referring now to the above said example, where the visual data of potato is obtained by the system 100 to predict its freshness when carried in a supply chain.

Referring now to the steps of the method 300, at step 304, the one or more hardware processors 104 determine a current quality parameter value of the visual data by mapping the storage data value of the input data with the storage data values associated in each weather zone. The plurality of weather zones are preconfigured in a look-up table associated with a trained quality parameter prediction module. The current quality parameter value of the visual data is determined by using the trained quality parameter prediction module.

The quality parameter prediction module 202 is trained by recording a plurality of sensory signals obtaining from a plurality of sensors of each food item in time series. Here, each food item is stored at a plurality of storage factors comprising a temperature, a light intensity, a relative humidity, a concentration of gases, and an air flow velocity. The concentration of gases includes an oxygen, water vapor, ethylene, carbon dioxide, air flow density, and thereof. Further, each storage factor comprises one or more values at regular intervals within a predefined range.

The plurality of sensory signals of each food item comprises a plurality of training visual data at the plurality of storage factors, and the quality parameter value is measured for the plurality of training visual data are obtained at regular interval(s). The quality parameter value indicates the freshness of each food item specified by the user in a supply chain. Further, a plurality of weather zones of each food item is generated from the plurality of sensory signals. Each weather zone includes an annotated training visual data with corresponding quality parameter value at the plurality of storage factors values.

Further, a look-up table is constructed by extracting one or more identical storage factor range values from the plurality of weather zones. Then, each identical storage factor range values are stored in each cluster.

Further, a plurality of classes are generated for each weather zone from the look-up table. Each class has a quality parameter range values identified based on an allowable tolerance value for predicting the quality parameter value and a prediction accuracy for the quality parameter value of the visual data.

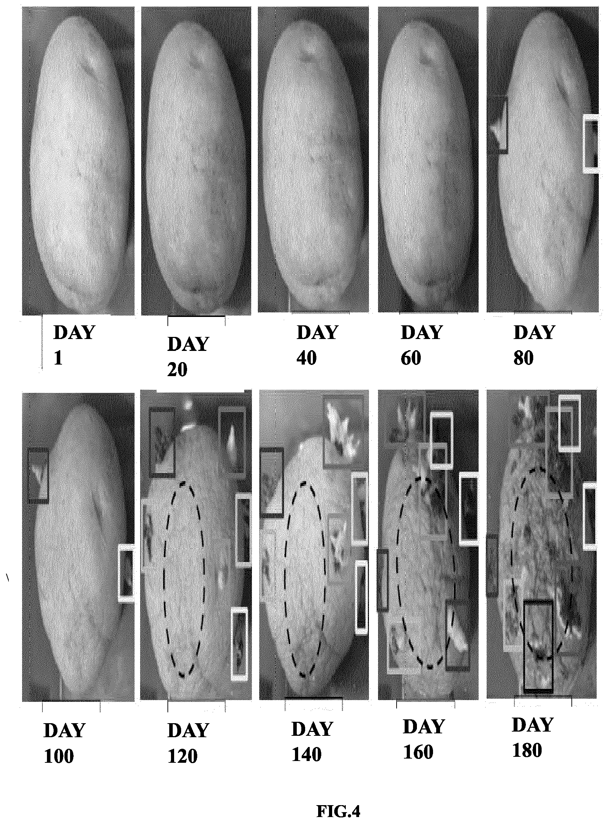

FIG.4 illustrates an example visual data of potatoes showing ageing analysis when stored at specific value of storage factors using the system of FIG.1, in accordance with some embodiments of the present disclosure. The ageing analysis of potatoes is obtained from the plurality of sensory signals that are prestored in the database.

In one embodiment, the plurality of weather zones is generated for each food item at the plurality of storage factors by performing the steps of, the plurality of storage factors range values of each food item being stored during the plurality of life cycle stages are fetched from a prestored database.

The prestored database includes a list of quality parameters such as the vitamin C, antioxidant content, one or more geometric dimension, a moisture content, carbohydrate, protein, fat, a list of relevant storage factors corresponding to each food item and the like. Referring to the above example for the input visual data of potatoes is obtained with corresponding storage data from the user. The storage factor may include the temperature and the relative humidity with storage factor range values (0 - 30°*C,* 60 - 90%). Meteorological thresholds are predetermined based on a standard range values from experimental data and the range values of storage factors are also fetched from the prestored database.

Further, each of the storage factor range values is divided into a first set and a second set based on a division factor value. The division factor value is a predefined factor which is measured to divide each storage factor range values. The predefined factor having a value of two, where the storage factors includes the temperature and the relative humidity. The first set includes 0-15°C for the temperature and 60-75% for the relative humidity and the second set includes 15-30°C for the temperature and 75-90% for the relative humidity.

In one embodiment, a first weather zone is generated by combining the first set of storage factor range values divided based on the division factor value. Referring to the above example, the first weather zone would be (0 - 15°*C,* 60 - 75%) temperature and the relative humidity.

**Table 1 - Temperature and relative humidity values for each weather zone**

| **Weather zone** | **Temperature (°C)** | **Relative Humidity (%)** | **Values for data collection** |
|---|---|---|---|
| 1 | 0-15 | 60-75 | 9°*C*, 60% |
| 2 (switched humidity value range) | 0-15 | 75-90 | 13°*C*, 80% |
| 3 (switched temperature value range) | 15-30 | 60-75 | 21.9°*C*, 65% |
| 4 (excluding first set of both) | 15-30 | 75-90 | 22°*C*, 85% |

Further, a plurality of intermediate weather zones are generated by excluding the first weather zone by substituting each storage factor range values of the first weather zone with next available storage factor range values obtained after the division factor value. Then, a plurality of last weather zones is generated by using all combination of storage factor range values excluding the first set of all storage factor range values. Each training visual data with corresponding quality parameter value are collected in time series at the plurality of storage factor values for each weather zone.

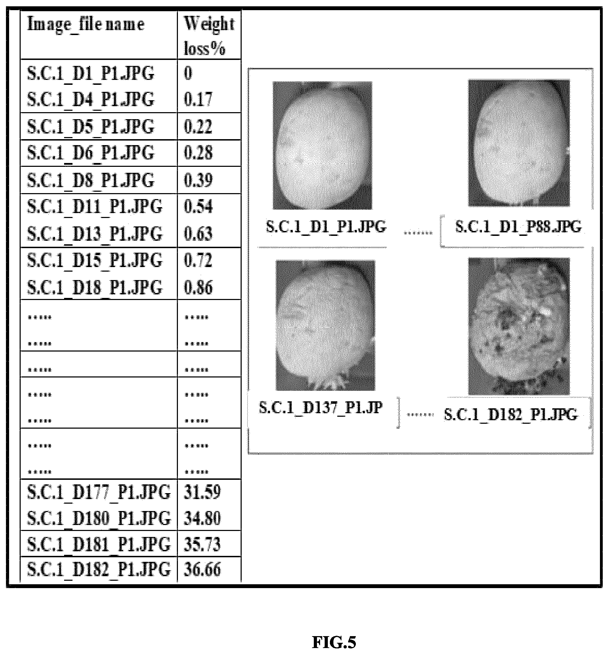

FIG.5 illustrates an example table showing visual data annotated with corresponding quality parameter value depicting weight loss percent of food item (potatoes) when stored at specific value of storage factors using the system of FIG. 1, in accordance with some embodiments of the present disclosure.

Further, a plurality of combined machine learning models is constructed by combining the annotated training visual data with corresponding quality parameter value of the first weather zone with subsequent data of weather zones with adjacent storage factor range values. The plurality of combined machine learning models includes (0°*C* - 15°*C,* 60 - 75% ) *and* (0°*C* - 15°*C,* 75 - 90% ) leading to (0-15C, 60-90%) *and* (0°*C* - 15°*C,* 60 - 75% ) *and* (15°*C* - 30°*C,* 60 - 75% ).leading to (0-30C, 60-75%).

The prediction accuracy for a sample visual data is evaluated by using the individual machine learning model for storage factor value 21.9°*C*, 65%.

Further, a new weather zone is generated if the difference in the prediction accuracy is lesser than a threshold difference, retain each combination machine learning model. The plurality of individual weather zones are discarded, and the division in range of values based on the storage factor variation between each combination machine learning model and each individual weather zones are removed from the plurality of intermediate weather zones and the plurality of last weather zones.

Further, if the difference in the prediction accuracy is greater than the threshold difference, the division factor is incremented by one and reiterate to divide the range values of storage factor which is different in combination and individual weather zones.

The prediction accuracy difference lesser than the threshold difference is given by the individual model as (0°*C* - 15°*C,* 60 - 75% ) and 0°*C -* 15°*C,* 75 - 90% )and the combination machine learning model is (0°*C* - 15°*C*, 60 - 90%) and divisions are removed based on the relative humidity to obtain the weather zones as (0-15C, 60-90%). This division of weather zone based on the relative humidity is removed from other weather zones also even if they have not been tested. For example, weather zones (15°*C* - 30°*C*, 60 - 75%) *and* 15°*C -* 30°*C*, 75 - 90%) will become *(15°C* - *30°C,* 60 - 90%).

The prediction accuracy greater than the threshold difference is given by the individual model as (0°*C* - 15°*C,* 60 - 75% ) and the combination machine learning model is (0°*C* - 15°*C,* 60 - 75%) *and* (0°*C -* 15°*C,* 60 - 75% ) and the division factor incremented by one. Further, new divisions are created based on the relative humidity which is different in the two weather zones such as (60 - 70%, 70 - 80%, 80 - 90%) the relative humidity and with temperature range as (0°*C* - 15°*C*).

In an embodiment of the present disclosure, the plurality of classes for each weather zone is generated by fetching the allowable tolerance value from the prestored database for predicting the quality parameter value required for each food item in the supply chain. Referring to the above example, the allowable tolerance value is predefined as 2%.

Further, a minimum value and a maximum value of the quality parameter values are obtained from each weather zone, and simultaneously obtaining the critical quality parameter value is obtained from the prestored database. The quality parameter value is set as (0 - 30%), wherein the minimum value is 0% and the maximum value is 30%.

Further, a new range for the quality parameter value is calculated by setting at least one of (i) the minimum value equal to the critical quality parameter value when the minimum value is greater than the critical quality parameter value, and (ii) the maximum value equal to the critical quality parameter value when the maximum value is lesser than the critical quality parameter value. The critical quality parameter value is represented as 10% and the new range for the quality parameter value is 0 - 10%). The minimum value is 0% and the maximum value is 10%.

Then, a total number of classes is obtained based on the difference between the maximum value and the minimum value of the quality parameter with the allowable tolerance and rounding off the total number of classes to a higher integer value. (10-0)/2 = 5.

Further, a revised allowable tolerance is obtained by dividing the difference between the minimum value and the maximum value of the quality parameter with the total number of classes. The revised allowable tolerance value is represented as (10/5) is 2%.

The plurality of classes includes 0 - 2%, 2 - 4%, 4 - 6%, 6 - 8%, 8 - 10% as described in Table 2, when the number of classes are five with one more class representing values beyond critical limit.

**Table 2- Classes generated using the revised allowable tolerance**

| **No. of classes** | **Classes (Cumulative weight loss %)** |
|---|---|
| 2 | **Class I:** 0-10%; **Class II:** >10% |
| 3 | **Class I:** 0-5%; **Class II:** 5-10%; **Class III:** >10% |
| 4 | **Class I:** 0-3.3%; **Class II:** 3.3-6.6%; **Class III:** 6.6-9.9%; **Class IV:** >10% |
| 5 | **Class I:** 0-2.5%; **Class II:** 2.5-5%; **Class III:** 5-7.5%; **Class IV:** 7.5-10%; **Class V:** >10% |
| 6 | **Class I:** 0-2%; **Class II:** 2-4%; **Class III:** 4-6%; **Class IV:** 6-8%; **Class V:** 8-10%; **Class VI:** >10% |
| 7 | **Class I:** 0-1.66%; **Class II:** 1.66-3.32%; **Class III:** 3.32-4.98%; **Class IV:** 4.98-6.64%; **Class V:** 6.64-8.3%; **Class VI:** 8.3-9.96%; **Class VII:** >10% |

The annotated training visual image data having quality parameter value are clustered falling in the same range of class into each class. The plurality of classes having the annotated training visual data are validated by using the machine learning model and a classification accuracy is determined. If the classification accuracy of machine learning model is lesser than a classification threshold accuracy, the number of classes (excluding the class representing values beyond the critical limit) is deducted by one and the allowable tolerance is updated by dividing the difference between minimum value and the maximum value of the quality parameter with the revised number of classes when the machine learning model is lesser than the classification threshold accuracy. Here, the classification threshold accuracy is 60%. The machine learning model with five classes (excluding the one representing values beyond critical limit) with class size 2% provides approximately 40% accuracy. Thus, the class number is decreased to 4 and the revised allowable tolerance (10/ (4) =2.5) providing the new classes as 0-2.5%, 2.5-5%, 5-7.5%, 7.5-10% and last one constant (>10%). This process is repeated until the classification accuracy is greater than threshold.

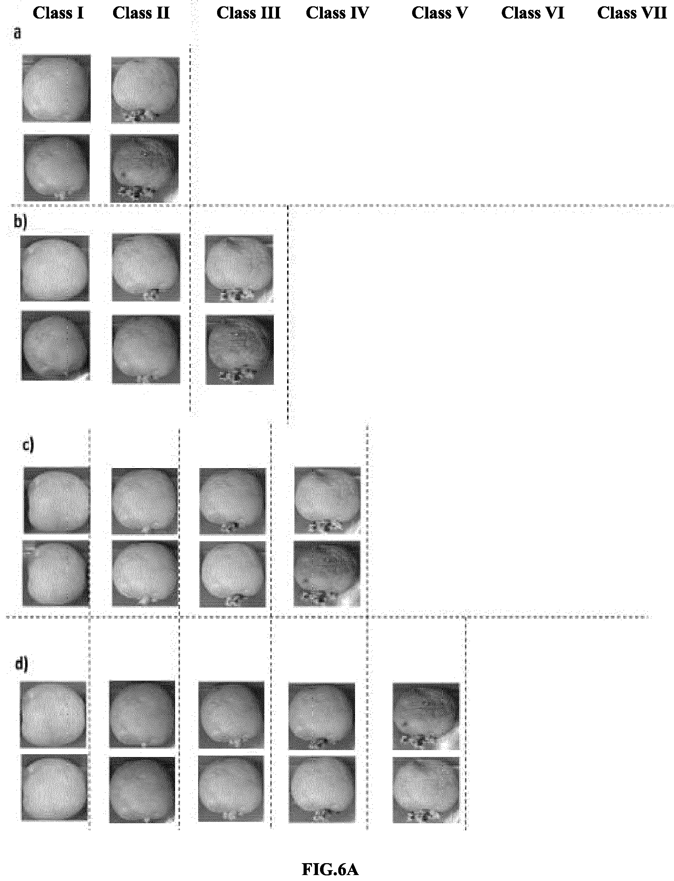

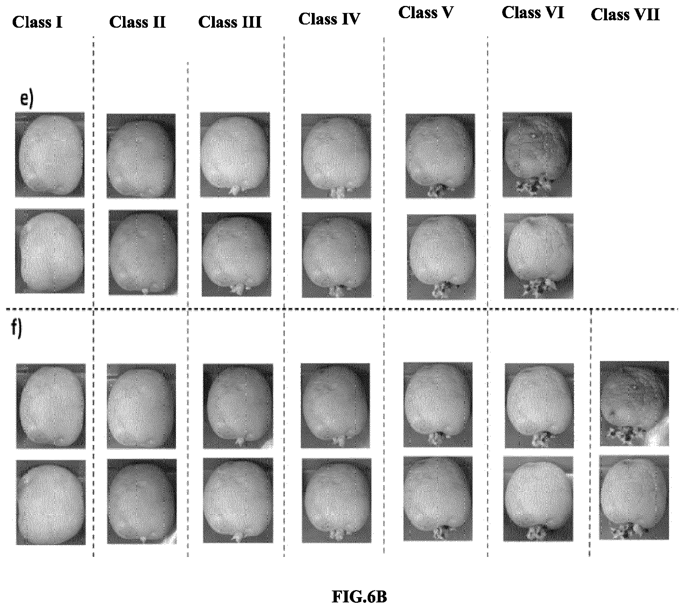

FIG.6A and FIG.6B illustrates an example sample visual data of food item potatoes for each class of multi-class models and class size using the system of FIG. 1, in accordance with some embodiments of the present disclosure.

The shelf life prediction module 204 divides the data of relevant quality parameter comprising vitamin C, the antioxidant content, geometric dimensions, moisture content, carbohydrates, protein, fat, and thereof versus time for each storage factor belonging to the plurality of weather zones into a training dataset and a test dataset having 80:20 ratio. Further, a set of mathematical equation is generated which correlates the quality parameter value with time and storage factors comprising the temperature, relative humidity, concentration of gases, air flow velocity, and thereof. The set of mathematics equation is derived from Arrhenius form of equation where dependence of quality parameter on time is linear and dependence on storage factors are exponential. The dependence of quality time on storage factors can be independent or coupled. For example, relevant storage factors may include the temperature (T), the relative humidity (RH) and the CO2 concentration (C), and the quality parameter is Q. Following equations can be generated as, where Equation 1 has only independent storage factor terms, $Q = a ∗ t \left({exp}^{b ∗ T}∗{exp}^{c ∗ RH}∗{exp}^{d ∗ C}\right)$ The Equations 2,3,4,5,6 and 7 have one coupled storage factor terms with same and opposite proportionality between coupled factors, $Q = a ∗ t \left({exp}^{b ∗ T}∗{exp}^{c ∗ RH}∗{exp}^{d ∗ C}∗{exp}^{e ∗ \frac{T}{RH}}\right)$ $Q = a ∗ t \left({exp}^{b ∗ T}∗{exp}^{c ∗ RH}∗{exp}^{d ∗ C}∗{exp}^{e ∗ T ∗ RH}\right)$ $Q = a ∗ t \left({exp}^{b ∗ T}∗{exp}^{c ∗ RH}∗{exp}^{d ∗ C}∗{exp}^{e ∗ c / RH}\right)$ $Q = a ∗ t \left({exp}^{b ∗ T}∗{exp}^{c ∗ RH}∗{exp}^{d ∗ C}∗{exp}^{e ∗ c ∗ RH}\right)$ $Q = a ∗ t \left({exp}^{b ∗ T}∗{exp}^{c ∗ RH}∗{exp}^{d ∗ C}∗{exp}^{e ∗ T / c}\right)$ $Q = a ∗ t \left({exp}^{b ∗ T}∗{exp}^{c ∗ RH}∗{exp}^{d ∗ C}∗{exp}^{e ∗ T ∗ c}\right)$ Here, equations are generated using 5 parameters based on parameterizing the equation with a greater number of parameters using a limited dataset might lead to an equation with high variance. Further, coefficients of each equation are obtained using the training dataset of quality parameter versus time and storage factors. Further, each Equation is validated with the test dataset of the quality parameter value against time and the storage factors, and the prediction accuracy is estimated to select one which gives highest accuracy. The quality parameter value Q = *f*(*T, RH, C, t*) is used to find the time corresponding to the current quality parameter value and the critical parameter value. The critical quality parameter value is obtained from the database and finding the difference between two times to get the value of shelf life is *shelf life* = *t_{cr} - tᵢ* where the shelf life is computed in days, *t_{cr}* is time calculated from the equation for the critical value of the quality parameter value, *tᵢ* is the time calculated from the equation for the current value of the quality parameter value.

FIG.7 illustrates a trend in classification accuracy for the plurality of allowable tolerance and subsequent number of classes of potatoes of one of the weather zones using the system of FIG. 1, in accordance with some embodiments of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of shelf life prediction. The embodiment, thus provides method and system for predicting shelf life of perishable food items. The disclosed method provides a generic model for shelf life prediction of food with corresponding visual data based on each weather zone with optimal number of classes which offers a trade-off between desired precision and accuracy in prediction. The quality parameter of the food item provides accurate storage factors influencing storage environment with biochemical parameter. Each weather zone comprises storage conditions indicating characteristics of food item being stored in the supply chain.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for predicting shelf life of perishable food items, the method comprising:
obtaining (302) from a user via one or more hardware processors (104), an input data comprising a visual data and a storage data associated with each food item, wherein the visual data comprises characteristics indicative of freshness of each food item, wherein the storage data comprises values specified by the user indicating storage environment of each food item being stored; **characterized in that**:
determining (304) via the one or more hardware processors (104), by using at least one of a plurality of weather zones that are preconfigured in a look-up table associated with a trained quality parameter prediction module (202), a current quality parameter value of the visual data by mapping the storage data value of the input data with the storage data values associated in each weather zone, wherein training the quality parameter prediction module (202) comprises:
recording a plurality of sensory signals obtained from a plurality of sensors of each food item in time series, wherein each food item is stored at a plurality of storage factors comprising a temperature, a light intensity, a relative humidity, a concentration of gases, and an air flow velocity, and wherein each storage factor comprises one or more values at regular interval(s) in a range;
obtaining at regular interval(s) the plurality of sensory signals of each food item comprising a plurality of training visual data at the plurality of storage factors, and the quality parameter value measured for the plurality of training visual data which indicates the freshness of each food item specified by the user in a supply chain;
generating the plurality of weather zones of each food item by using the plurality of sensory signals, wherein each weather zone includes an annotated training visual data with corresponding quality parameter value at the plurality of storage factors values; and
predicting (306) by using a shelf life prediction module (204) via the one or more hardware processors(104), a shelf life for the visual data associated with the input data by using the current quality parameter value, a critical quality parameter value, and the storage data, wherein the shelf life prediction module (204) divides the data of relevant quality parameter comprising vitamin C, the antioxidant content, geometric dimensions, moisture content, carbohydrates, protein, fat, and thereof versus time for each storage factor belonging to the plurality of weather zones into a training dataset and a test dataset having 80:20 ratio;
generating a set of mathematical equations which correlates the quality parameter value with time and storage factors comprising the temperature, relative humidity, concentration of gases, air flow velocity, wherein the set of mathematical equations is derived from Arrhenius form of equation where dependence of quality parameter on time is linear and dependence on storage factors are exponential and wherein the dependence of quality time on storage factors is independent or coupled.

2. The processor implemented method as claimed in claim 1, wherein training the quality parameter prediction module further comprises:
constructing the look-up table by extracting one or more identical storage factor range values from the plurality of weather zones and storing each identical storage factor range values in each cluster; and
generating a plurality of classes for each weather zone associated with the look-up table, where each class has a quality parameter range values identified based on an allowable tolerance value for predicting the quality parameter value and a prediction accuracy of the quality parameter value of each visual data.

3. The processor implemented method as claimed in claim 1, wherein generating the plurality of weather zones of each food item at the plurality of storage factors comprises:
fetching from a prestored database the plurality of storage factors range values of each food item being stored during the plurality of life cycle stages;
dividing each storage factor range values into a first set and a second set by using a division factor value;
generating a first weather zone by combining the first set of storage factor range values divided based on the division factor value;
generating a plurality of intermediate weather zones excluding the first weather zone by substituting each storage factor range values of the first weather zone with next available storage factor range values obtained after the division factor value;
generating a plurality of last weather zones by using all combination of storage factor range values excluding the first set of all storage factor range values;
collecting each training visual data with corresponding quality parameter value in time series at the plurality of storage factor values for each weather zone;
iteratively performing, to evaluate the prediction accuracy for the plurality of training visual data with corresponding quality parameter by,
constructing an individual machine learning model for the first weather zone based on the training visual data annotated with corresponding quality parameter value;
constructing a plurality of combined machine learning models, by combining the annotated training visual data with corresponding quality parameter value of the first weather zone with subsequent data of available weather zone; and
evaluating the prediction accuracy for a sample visual data, by comparing the individual machine learning model with each revised combined machine learning model and generating a new weather zone based on a threshold difference,
wherein if the difference in the prediction accuracy is lesser than a threshold difference, retain each combination machine learning model, and discard the plurality of individual weather zones, and the division of range of values based on the storage factor variation between each combination machine learning model and each individual weather zones are removed from the plurality of intermediate weather zones and the plurality of last weather zones, and
if the difference in the prediction accuracy is greater than the threshold difference, the division factor is incremented by one and reiterate to divide the range values of storage which is different in combination and individual weather zones.

4. The processor implemented method as claimed in claim 2, wherein generating the plurality of classes for each weather zone comprises:
fetching from the prestored database the allowable tolerance value for predicting the quality parameter value required for each food item in the supply chain;
obtaining a minimum value and a maximum value of the quality parameter values from each weather zone, and simultaneously obtaining the critical quality parameter value from the prestored database;
calculating a new range for the quality parameter value by setting at least one of (i) the minimum value equal to the critical quality parameter value when the minimum value is greater than the critical quality parameter value, and (ii) the maximum value equal to the critical quality parameter value when the maximum value is lesser than the critical quality parameter value;
obtaining a total number of classes based on the difference between the maximum value and the minimum value of the quality parameter with the allowable tolerance, and rounding off the total number of classes to a higher integer value;
obtaining a revised allowable tolerance by dividing the difference between the minimum value and the maximum value of the quality parameter with the total number of classes;
generating the plurality of classes by using the revised allowable tolerance as a class size, and listing each class within the range of quality parameter values;
clustering the annotated training visual image data having quality parameter value falling in the same range of class into each class;
validating the plurality of classes having the annotated training visual data by using the machine learning model and a classification accuracy is determined when the machine learning model is greater than a classification threshold accuracy; and
updating the allowable tolerance by multiplying the allowable tolerance with a multiplication factor when the machine learning model is lesser than the classification threshold accuracy.

5. A system (100) for predicting shelf life of perishable food items comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain from a user an input data comprising a visual data and a storage data associated with each food item, wherein the visual data comprises characteristics indicative of freshness of each food item, wherein the storage data comprises values specified by the user indicating storage environment of each food item being stored; **characterized in that**: determine by using at least one of a plurality of weather zones that are preconfigured in a look-up table associated with a trained quality parameter prediction module (202), a current quality parameter value of the visual data by mapping the storage data value of the input data with the storage data values associated in each weather zone wherein training the quality parameter prediction module (202) comprises:
recording a plurality of sensory signals obtained from a plurality of sensors of each food item in time series, wherein each food item is stored at a plurality of storage factors comprising a temperature, a light intensity, a relative humidity, a concentration of gases, and an air flow velocity, and wherein each storage factor comprises one or more values at regular interval(s) in a range;
obtaining at regular interval(s) the plurality of sensory signals of each food item comprising a plurality of training visual data at the plurality of storage factors, and the quality parameter value measured for the plurality of training visual data which indicates the freshness of each food item specified by the user in a supply chain;
generating the plurality of weather zones of each food item by using the plurality of sensory signals, wherein each weather zone includes an annotated training visual data with corresponding quality parameter value at the plurality of storage factors values; and
predict by using a shelf life prediction module (204) a shelf life for the visual data associated with the input data by using the current quality parameter value, a critical quality parameter value, and the storage data, wherein the shelf life prediction module (204) divides the data of relevant quality parameter comprising vitamin C, the antioxidant content, geometric dimensions, moisture content, carbohydrates, protein, fat, and thereof versus time for each storage factor belonging to the plurality of weather zones into a training dataset and a test dataset having 80:20 ratio;
generating a set of mathematical equations which correlates the quality parameter value with time and storage factors comprising the temperature, relative humidity, concentration of gases, air flow velocity, wherein the set of mathematical equations is derived from Arrhenius form of equation where dependence of quality parameter on time is linear and dependence on storage factors are exponential and wherein the dependence of quality time on storage factors is independent or coupled.

6. The system as claimed in claim 5, wherein training the quality parameter prediction module further comprises:
constructing the look-up table by extracting one or more identical storage factor range values from the plurality of weather zones and storing each identical storage factor range values in each cluster; and
generate a plurality of classes for each weather zone associated with the look-up table, where each class has a quality parameter range values identified based on an allowable tolerance value for predicting the quality parameter value and a prediction accuracy of the quality parameter value of each visual data.

7. The system (100) as claimed in claim 5, wherein generating the plurality of weather zones of each food item at the plurality of storage factors comprises:
fetch from a prestored database the plurality of storage factors range values of each food item being stored during the plurality of life cycle stages;
divide each storage factor range values into a first set and a second set by using a division factor value;
generate a first weather zone by combining the first set of storage factor range values divided based on the division factor value;
generate a plurality of intermediate weather zones excluding the first weather zone by substituting each storage factor range values of the first weather zone with next available storage factor range values obtained after the division factor value;
generate a plurality of last weather zones by using all combination of storage factor range values excluding the first set of all storage factor range values;
collect each training visual data with corresponding quality parameter value in time series at the plurality of storage factor values for each weather zone;
iteratively perform to evaluate the prediction accuracy for the plurality of training visual data with corresponding quality parameter by,
construct an individual machine learning model for the first weather zone based on the training visual data annotated with corresponding quality parameter value;
construct a plurality of combined machine learning models, by combining the annotated training visual data with corresponding quality parameter value of the first weather zone with subsequent data of available weather zone; and
evaluate the prediction accuracy for a sample visual data, by comparing the individual machine learning model with each revised combined machine learning model and generating a new weather zone based on a threshold difference,
wherein if the difference in the prediction accuracy is lesser than a threshold difference, retain each combination machine learning model, and discard the plurality of individual weather zones, and the division factor is based on the storage factor value variation between each combination machine learning model and each individual weather zones are removed from the plurality of intermediate weather zones and the plurality of last weather zones, and
if the difference in the prediction accuracy is greater than the threshold difference, the division factor is incremented by one and reiterate to divide the range values of storage which is different in combination and individual weather zones.

8. The system as claimed in claim 6, wherein generating the plurality of classes for each weather zone comprises:
fetch from the prestored database, the allowable tolerance value for predicting the quality parameter value required for each food item in the supply chain;
obtain a minimum value and a maximum value of the quality parameter values from each weather zone, and simultaneously obtaining the critical quality parameter value from the prestored database;
calculate a new range for the quality parameter value by setting at least one of (i) the minimum value equal to the critical quality parameter value when the minimum value is greater than the critical quality parameter value, and (ii) the maximum value equal to the critical quality parameter value when the maximum value is lesser than the critical quality parameter value;
obtain a total number of classes based on the difference between the maximum value and the minimum value of the quality parameter with the allowable tolerance, and rounding off the total number of classes to a higher integer value;
obtain a revised allowable tolerance by dividing the difference between the minimum value and the maximum value of the quality parameter with the total number of classes;
generate the plurality of classes by using the revised allowable tolerance as a class size, and listing each class within the range of quality parameter values;
cluster the annotated training visual image data having quality parameter value falling in the same range of class into each class;
validate the plurality of classes having the annotated training visual data by using the machine learning model and a classification accuracy is determined when the machine learning model is greater than a classification threshold accuracy; and
update the allowable tolerance by multiplying the allowable tolerance with a multiplication factor when the machine learning model is lesser than the classification threshold accuracy.

9. One or more non-transitory machine-readable information storage mediums comprising one or more instructions which when executed by one or more hardware processors cause:
obtaining from a user an input data comprising a visual data and a storage data associated with each food item, wherein the visual data comprises characteristics indicative of freshness of each food item, wherein the storage data comprises values specified by the user indicating storage environment of each food item being stored; **characterized in that**:
determining by using at least one of a plurality of weather zones that are preconfigured in a look-up table associated with a trained quality parameter prediction module (202), a current quality parameter value of the visual data by mapping the storage data value of the input data with the storage data values associated in each weather zone wherein training the quality parameter prediction module (202) comprises:
recording a plurality of sensory signals obtained from a plurality of sensors of each food item in time series, wherein each food item is stored at a plurality of storage factors comprising a temperature, a light intensity, a relative humidity, a concentration of gases, and an air flow velocity, and wherein each storage factor comprises one or more values at regular interval(s) in a range;
obtaining at regular interval(s) the plurality of sensory signals of each food item comprising a plurality of training visual data at the plurality of storage factors, and the quality parameter value measured for the plurality of training visual data which indicates the freshness of each food item specified by the user in a supply chain;
generating the plurality of weather zones of each food item by using the plurality of sensory signals, wherein each weather zone includes an annotated training visual data with corresponding quality parameter value at the plurality of storage factors values; and
predicting by using a shelf life prediction module (204) a shelf life for the visual data associated with the input data by using the current quality parameter value, a critical quality parameter value, and the storage data.

10. The one or more non-transitory machine-readable information storage mediums of claim 9, wherein training the quality parameter prediction module further comprises:
constructing the look-up table by extracting one or more identical storage factor range values from the plurality of weather zones and storing each identical storage factor range values in each cluster; and
generating a plurality of classes for each weather zone associated with the look-up table, where each class has a quality parameter range values identified based on an allowable tolerance value for predicting the quality parameter value and a prediction accuracy of the quality parameter value of each visual data, wherein the shelf life prediction module (204) divides the data of relevant quality parameter comprising vitamin C, the antioxidant content, geometric dimensions, moisture content, carbohydrates, protein, fat, and thereof versus time for each storage factor belonging to the plurality of weather zones into a training dataset and a test dataset having 80:20 ratio;
generating a set of mathematical equations which correlates the quality parameter value with time and storage factors comprising the temperature, relative humidity, concentration of gases, air flow velocity, wherein the set of mathematical equations is derived from Arrhenius form of equation where dependence of quality parameter on time is linear and dependence on storage factors are exponential and wherein the dependence of quality time on storage factors is independent or coupled.

11. The one or more non-transitory machine-readable information storage mediums of claim 9, wherein generating the plurality of weather zones of each food item at the plurality of storage factors comprises:
fetching from a prestored database the plurality of storage factors range values of each food item being stored during the plurality of life cycle stages;
dividing each storage factor range values into a first set and a second set by using a division factor value;
generating a first weather zone by combining the first set of storage factor range values divided based on the division factor value;
generating a plurality of intermediate weather zones excluding the first weather zone by substituting each storage factor range values of the first weather zone with next available storage factor range values obtained after the division factor value;
generating a plurality of last weather zones by using all combination of storage factor range values excluding the first set of all storage factor range values;
collecting each training visual data with corresponding quality parameter value in time series at the plurality of storage factor values for each weather zone;
iteratively performing to evaluate the prediction accuracy for the plurality of training visual data with corresponding quality parameter by,
constructing an individual machine learning model for the first weather zone based on the training visual data annotated with corresponding quality parameter value;
constructing a plurality of combined machine learning models, by combining the annotated training visual data with corresponding quality parameter value of the first weather zone with subsequent data of available weather zone; and
evaluating the prediction accuracy for a sample visual data, by comparing the individual machine learning model with each revised combined machine learning model and generating a new weather zone based on a threshold difference,
wherein if the difference in the prediction accuracy is lesser than a threshold difference, retain each combination machine learning model, and discard the plurality of individual weather zones, and the division of range of values based on the storage factor variation between each combination machine learning model and each individual weather zones are removed from the plurality of intermediate weather zones and the plurality of last weather zones, and
if the difference in the prediction accuracy is greater than the threshold difference, the division factor is incremented by one and reiterate to divide the range values of storage which is different in combination and individual weather zones.

12. The one or more non-transitory machine-readable information storage mediums of claim 10, wherein generating the plurality of classes for each weather zone comprises:
fetching from the prestored database, the allowable tolerance value for predicting the quality parameter value required for each food item in the supply chain;
obtaining a minimum value and a maximum value of the quality parameter values from each weather zone, and simultaneously obtaining the critical quality parameter value from the prestored database;
calculating a new range for the quality parameter value by setting at least one of (i) the minimum value equal to the critical quality parameter value when the minimum value is greater than the critical quality parameter value, and (ii) the maximum value equal to the critical quality parameter value when the maximum value is lesser than the critical quality parameter value;
obtaining a total number of classes based on the difference between the maximum value and the minimum value of the quality parameter with the allowable tolerance, and rounding off the total number of classes to a higher integer value;
obtaining a revised allowable tolerance by dividing the difference between the minimum value and the maximum value of the quality parameter with the total number of classes;
generating the plurality of classes by using the revised allowable tolerance as a class size, and listing each class within the range of quality parameter values;
clustering the annotated training visual image data having quality parameter value falling in the same range of class into each class;
validating the plurality of classes having the annotated training visual data by using the machine learning model and a classification accuracy is determined when the machine learning model is greater than a classification threshold accuracy; and
updating the allowable tolerance by multiplying the allowable tolerance with a multiplication factor when the machine learning model is lesser than the classification threshold accuracy.

## Patentansprüche

1. Prozessorimplementiertes Verfahren (300) zum Vorhersagen der Haltbarkeit von verderblichen Lebensmitteln, wobei das Verfahren umfasst:
Erhalten (302), von einem Benutzer über einen oder mehrere Hardwareprozessoren (104), von Eingabedaten, die visuelle Daten und Speicherdaten umfassen, die jedem Lebensmittel zugeordnet sind, wobei die visuellen Daten Eigenschaften umfassen, die die Frische jedes Lebensmittels anzeigen, wobei die Speicherdaten Werte umfassen, die vom Benutzer spezifiziert werden und die Speicherumgebung jedes Lebensmittels anzeigen, das gespeichert wird; **dadurch gekennzeichnet, dass**:
Bestimmen (304), über den einen oder die mehreren Hardwareprozessoren (104), unter Verwendung mindestens einer von einer Mehrzahl von Wetterzonen, die in einer Nachschlagetabelle vorkonfiguriert sind, die einem trainierten Qualitätsparametervorhersagemodul (202) zugeordnet ist, eines aktuellen Qualitätsparameterwerts der visuellen Daten durch Abbilden des Speicherdatenwerts der Eingabedaten auf die Speicherdatenwerte, die jeder Wetterzone zugeordnet sind, wobei das Trainieren des Qualitätsparametervorhersagemoduls (202) umfasst:
Aufzeichnen einer Mehrzahl von sensorischen Signalen, die von einer Mehrzahl von Sensoren jedes Lebensmittels in Zeitreihen erhalten werden, wobei jedes Lebensmittel bei einer Mehrzahl von Speicherfaktoren gespeichert wird, die eine Temperatur, eine Lichtintensität, eine relative Feuchtigkeit, eine Konzentration von Gasen und eine Luftströmungsgeschwindigkeit umfassen, und wobei jeder Speicherfaktor einen oder mehrere Werte in regelmäßigen Intervallen in einem Bereich umfasst;
Erhalten, in regelmäßigen Intervallen, der Mehrzahl von sensorischen Signalen jedes Lebensmittels, die eine Mehrzahl von visuellen Trainingsdaten bei der Mehrzahl von Speicherfaktoren umfassen, und des Qualitätsparameterwerts, der für die Mehrzahl von visuellen Trainingsdaten gemessen wird, der die Frische jedes Lebensmittels anzeigt, die vom Benutzer in einer Lieferkette spezifiziert wird;
Erzeugen der Mehrzahl von Wetterzonen jedes Lebensmittels unter Verwendung der Mehrzahl von sensorischen Signalen, wobei jede Wetterzone annotierte visuelle Trainingsdaten mit entsprechendem Qualitätsparameterwert bei der Mehrzahl von Speicherfaktorwerten beinhaltet; und
Vorhersagen (306), unter Verwendung eines Haltbarkeitsvorhersagemoduls (204) über den einen oder die mehreren Hardwareprozessoren (104), einer Haltbarkeit für die visuellen Daten, die den Eingabedaten zugeordnet sind, unter Verwendung des aktuellen Qualitätsparameterwerts, eines kritischen Qualitätsparameterwerts und der Speicherdaten, wobei das Haltbarkeitsvorhersagemodul (204) die Daten des relevanten Qualitätsparameters, der Vitamin C, den Antioxidationsmittelgehalt, geometrische Abmessungen, Feuchtigkeitsgehalt, Kohlenhydrate, Protein, Fett und davon umfasst, im Verhältnis zur Zeit für jeden Speicherfaktor, der zu der Mehrzahl von Wetterzonen gehört, in einen Trainingsdatensatz und einen Testdatensatz mit einem Verhältnis von 80:20 unterteilt;
Erzeugen eines Satzes von mathematischen Gleichungen, die den Qualitätsparameterwert mit der Zeit und Speicherfaktoren korrelieren, die die Temperatur, relative Feuchtigkeit, Konzentration von Gasen, Luftströmungsgeschwindigkeit umfassen, wobei der Satz von mathematischen Gleichungen aus der Arrhenius-Form der Gleichung abgeleitet wird, wobei die Abhängigkeit des Qualitätsparameters von der Zeit linear ist und die Abhängigkeit von Speicherfaktoren exponentiell ist und wobei die Abhängigkeit der Qualitätszeit von den Speicherfaktoren unabhängig oder gekoppelt ist.

2. Prozessorimplementiertes Verfahren nach Anspruch 1, wobei das Trainieren des Qualitätsparametervorhersagemoduls ferner umfasst:
Konstruieren der Nachschlagetabelle durch Extrahieren eines oder mehrerer identischer Speicherfaktorbereichswerte aus der Mehrzahl von Wetterzonen und Speichern jedes identischen Speicherfaktorbereichswerts in jedem Cluster; und
Erzeugen einer Mehrzahl von Klassen für jede Wetterzone, die der Nachschlagetabelle zugeordnet ist, wobei jede Klasse einen Qualitätsparameterbereichswert aufweist, der basierend auf einem zulässigen Toleranzwert zum Vorhersagen des Qualitätsparameterwerts und einer Vorhersagegenauigkeit des Qualitätsparameterwerts jeder visuellen Daten identifiziert wird.

3. Prozessorimplementiertes Verfahren nach Anspruch 1, wobei das Erzeugen der Mehrzahl von Wetterzonen jedes Lebensmittels bei der Mehrzahl von Speicherfaktoren umfasst:
Abrufen der Mehrzahl von Speicherfaktorbereichswerten jedes Lebensmittels, die während der Mehrzahl von Lebenszyklusphasen gespeichert werden, aus einer vorgespeicherten Datenbank;
Unterteilen jedes Speicherfaktorbereichswerts in einen ersten Satz und einen zweiten Satz unter Verwendung eines Teilungsfaktorwerts;
Erzeugen einer ersten Wetterzone durch Kombinieren des ersten Satzes von Speicherfaktorbereichswerten, die basierend auf dem Teilungsfaktorwert unterteilt werden;
Erzeugen einer Mehrzahl von Zwischenwetterzonen, die die erste Wetterzone ausschließen, durch Ersetzen jedes Speicherfaktorbereichswerts der ersten Wetterzone durch nächste verfügbare Speicherfaktorbereichswerte, die nach dem Teilungsfaktorwert erhalten werden;
Erzeugen einer Mehrzahl von letzten Wetterzonen unter Verwendung aller Kombinationen von Speicherfaktorbereichswerten, die den ersten Satz aller Speicherfaktorbereichswerte ausschließen;
Sammeln jeder visuellen Trainingsdaten mit entsprechendem Qualitätsparameterwert in Zeitreihen bei der Mehrzahl von Speicherfaktorwerten für jede Wetterzone;
iteratives Durchführen, um die Vorhersagegenauigkeit für die Mehrzahl von visuellen Trainingsdaten mit entsprechendem Qualitätsparameter zu bewerten, durch
Konstruieren eines individuellen Maschinenlernmodells für die erste Wetterzone basierend auf den visuellen Trainingsdaten, die mit entsprechendem Qualitätsparameterwert kommentiert sind;
Konstruieren einer Mehrzahl von kombinierten Maschinenlernmodellen durch Kombinieren der kommentierten visuellen Trainingsdaten mit entsprechendem Qualitätsparameterwert der ersten Wetterzone mit nachfolgenden Daten der verfügbaren Wetterzone; und
Bewerten der Vorhersagegenauigkeit für visuelle Musterdaten durch Vergleichen des individuellen Maschinenlernmodells mit jedem revidierten kombinierten Maschinenlernmodell und Erzeugen einer neuen Wetterzone basierend auf einer Schwellendifferenz,
wobei, wenn die Differenz in der Vorhersagegenauigkeit kleiner als eine Schwellendifferenz ist, jedes kombinierte Maschinenlernmodell beibehalten wird und die Mehrzahl von individuellen Wetterzonen verworfen wird und die Teilung des Bereichs von Werten basierend auf der Speicherfaktorvariation zwischen jedem kombinierten Maschinenlernmodell und jeder individuellen Wetterzone aus der Mehrzahl von Zwischenwetterzonen und der Mehrzahl von letzten Wetterzonen entfernt wird, und
wenn die Differenz in der Vorhersagegenauigkeit größer als die Schwellendifferenz ist, der Teilungsfaktor um eins erhöht wird und wiederholt wird, um die Bereichswerte des Speichers zu unterteilen, der in Kombination und individuellen Wetterzonen unterschiedlich ist.

4. Prozessorimplementiertes Verfahren nach Anspruch 2, wobei das Erzeugen der Mehrzahl von Klassen für jede Wetterzone umfasst:
Abrufen des zulässigen Toleranzwerts aus der vorgespeicherten Datenbank zum Vorhersagen des Qualitätsparameterwerts, der für jedes Lebensmittel in der Lieferkette erforderlich ist;
Erhalten eines Minimalwerts und eines Maximalwerts der Qualitätsparameterwerte von jeder Wetterzone und gleichzeitiges Erhalten des kritischen Qualitätsparameterwerts aus der vorgespeicherten Datenbank;
Berechnen eines neuen Bereichs für den Qualitätsparameterwert durch Einstellen von mindestens einem von (i) dem Minimalwert gleich dem kritischen Qualitätsparameterwert, wenn der Minimalwert größer als der kritische Qualitätsparameterwert ist, und (ii) dem Maximalwert gleich dem kritischen Qualitätsparameterwert, wenn der Maximalwert kleiner als der kritische Qualitätsparameterwert ist;
Erhalten einer Gesamtzahl von Klassen basierend auf der Differenz zwischen dem Maximalwert und dem Minimalwert des Qualitätsparameters mit der zulässigen Toleranz und Abrunden der Gesamtzahl von Klassen auf einen höheren ganzzahligen Wert;
Erhalten einer revidierten zulässigen Toleranz durch Dividieren der Differenz zwischen dem Minimalwert und dem Maximalwert des Qualitätsparameters durch die Gesamtzahl von Klassen;
Erzeugen der Mehrzahl von Klassen durch Verwenden der revidierten zulässigen Toleranz als eine Klassengröße und Auflisten jeder Klasse innerhalb des Bereichs von Qualitätsparameterwerten;
Clustern der kommentierten visuellen Trainingsbilddaten mit Qualitätsparameterwert, der in den gleichen Klassenbereich fällt, in jede Klasse;
Validieren der Mehrzahl von Klassen mit den kommentierten visuellen Trainingsdaten durch Verwenden des Maschinenlernmodells und eine Klassifizierungsgenauigkeit wird bestimmt, wenn das Maschinenlernmodell größer als eine Klassifizierungsschwellengenauigkeit ist; und
Aktualisieren der zulässigen Toleranz durch Multiplizieren der zulässigen Toleranz mit einem Multiplikationsfaktor, wenn das Maschinenlernmodell kleiner als die Klassifizierungsschwellengenauigkeit ist.

5. System (100) zum Vorhersagen der Haltbarkeit von verderblichen Lebensmitteln, umfassend:
einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:
Erhalten, von einem Benutzer, von Eingabedaten, die visuelle Daten und Speicherdaten umfassen, die jedem Lebensmittel zugeordnet sind, wobei die visuellen Daten Eigenschaften umfassen, die die Frische jedes Lebensmittels anzeigen, wobei die Speicherdaten Werte umfassen, die vom Benutzer spezifiziert werden und die Speicherumgebung jedes Lebensmittels anzeigen, das gespeichert wird; **dadurch gekennzeichnet, dass**:Bestimmen, unter Verwendung mindestens einer von einer Mehrzahl von Wetterzonen, die in einer Nachschlagetabelle vorkonfiguriert sind, die einem trainierten Qualitätsparametervorhersagemodul (202) zugeordnet ist, eines aktuellen Qualitätsparameterwerts der visuellen Daten durch Abbilden des Speicherdatenwerts der Eingabedaten auf die Speicherdatenwerte, die jeder Wetterzone zugeordnet sind, wobei das Trainieren des Qualitätsparametervorhersagemoduls (202) umfasst:
Aufzeichnen einer Mehrzahl von sensorischen Signalen, die von einer Mehrzahl von Sensoren jedes Lebensmittels in Zeitreihen erhalten werden, wobei jedes Lebensmittel bei einer Mehrzahl von Speicherfaktoren gespeichert wird, die eine Temperatur, eine Lichtintensität, eine relative Feuchtigkeit, eine Konzentration von Gasen und eine Luftströmungsgeschwindigkeit umfassen, und wobei jeder Speicherfaktor einen oder mehrere Werte in regelmäßigen Intervallen in einem Bereich umfasst;
Erhalten, in regelmäßigen Intervallen, der Mehrzahl von sensorischen Signalen jedes Lebensmittels, die eine Mehrzahl von visuellen Trainingsdaten bei der Mehrzahl von Speicherfaktoren umfassen, und des Qualitätsparameterwerts, der für die Mehrzahl von visuellen Trainingsdaten gemessen wird, der die Frische jedes Lebensmittels anzeigt, die vom Benutzer in einer Lieferkette spezifiziert wird;
Erzeugen der Mehrzahl von Wetterzonen jedes Lebensmittels unter Verwendung der Mehrzahl von sensorischen Signalen, wobei jede Wetterzone annotierte visuelle Trainingsdaten mit entsprechendem Qualitätsparameterwert bei der Mehrzahl von Speicherfaktorwerten beinhaltet; und
Vorhersagen, unter Verwendung eines Haltbarkeitsvorhersagemoduls (204), einer Haltbarkeit für die visuellen Daten, die den Eingabedaten zugeordnet sind, unter Verwendung des aktuellen Qualitätsparameterwerts, eines kritischen Qualitätsparameterwerts und der Speicherdaten, wobei das Haltbarkeitsvorhersagemodul (204) die Daten des relevanten Qualitätsparameters, der Vitamin C, den Antioxidationsmittelgehalt, geometrische Abmessungen, Feuchtigkeitsgehalt, Kohlenhydrate, Protein, Fett und davon umfasst, im Verhältnis zur Zeit für jeden Speicherfaktor, der zu der Mehrzahl von Wetterzonen gehört, in einen Trainingsdatensatz und einen Testdatensatz mit einem Verhältnis von 80:20 unterteilt;
Erzeugen eines Satzes von mathematischen Gleichungen, die den Qualitätsparameterwert mit der Zeit und Speicherfaktoren korrelieren, die die Temperatur, relative Feuchtigkeit, Konzentration von Gasen, Luftströmungsgeschwindigkeit umfassen, wobei der Satz von mathematischen Gleichungen aus der Arrhenius-Form der Gleichung abgeleitet wird, wobei die Abhängigkeit des Qualitätsparameters von der Zeit linear ist und die Abhängigkeit von Speicherfaktoren exponentiell ist und wobei die Abhängigkeit der Qualitätszeit von den Speicherfaktoren unabhängig oder gekoppelt ist.

6. System nach Anspruch 5, wobei das Trainieren des Qualitätsparametervorhersagemoduls ferner umfasst:
Konstruieren der Nachschlagetabelle durch Extrahieren eines oder mehrerer identischer Speicherfaktorbereichswerte aus der Mehrzahl von Wetterzonen und Speichern jedes identischen Speicherfaktorbereichswerts in jedem Cluster; und
Erzeugen einer Mehrzahl von Klassen für jede Wetterzone, die der Nachschlagetabelle zugeordnet ist, wobei jede Klasse einen Qualitätsparameterbereichswert aufweist, der basierend auf einem zulässigen Toleranzwert zum Vorhersagen des Qualitätsparameterwerts und einer Vorhersagegenauigkeit des Qualitätsparameterwerts jeder visuellen Daten identifiziert wird.

7. System (100) nach Anspruch 5, wobei das Erzeugen der Mehrzahl von Wetterzonen jedes Lebensmittels bei der Mehrzahl von Speicherfaktoren umfasst:
Abrufen der Mehrzahl von Speicherfaktorbereichswerten jedes Lebensmittels, die während der Mehrzahl von Lebenszyklusphasen gespeichert werden, aus einer vorgespeicherten Datenbank;
Unterteilen jedes Speicherfaktorbereichswerts in einen ersten Satz und einen zweiten Satz unter Verwendung eines Teilungsfaktorwerts;
Erzeugen einer ersten Wetterzone durch Kombinieren des ersten Satzes von Speicherfaktorbereichswerten, die basierend auf dem Teilungsfaktorwert unterteilt werden;
Erzeugen einer Mehrzahl von Zwischenwetterzonen, die die erste Wetterzone ausschließen, durch Ersetzen jedes Speicherfaktorbereichswerts der ersten Wetterzone durch nächste verfügbare Speicherfaktorbereichswerte, die nach dem Teilungsfaktorwert erhalten werden;
Erzeugen einer Mehrzahl von letzten Wetterzonen unter Verwendung aller Kombinationen von Speicherfaktorbereichswerten, die den ersten Satz aller Speicherfaktorbereichswerte ausschließen;
Sammeln jeder visuellen Trainingsdaten mit entsprechendem Qualitätsparameterwert in Zeitreihen bei der Mehrzahl von Speicherfaktorwerten für jede Wetterzone;
iteratives Durchführen, um die Vorhersagegenauigkeit für die Mehrzahl von visuellen Trainingsdaten mit entsprechendem Qualitätsparameter zu bewerten, durch
Konstruieren eines individuellen Maschinenlernmodells für die erste Wetterzone basierend auf den visuellen Trainingsdaten, die mit entsprechendem Qualitätsparameterwert kommentiert sind;
Konstruieren einer Mehrzahl von kombinierten Maschinenlernmodellen durch Kombinieren der kommentierten visuellen Trainingsdaten mit entsprechendem Qualitätsparameterwert der ersten Wetterzone mit nachfolgenden Daten der verfügbaren Wetterzone; und
Bewerten der Vorhersagegenauigkeit für visuelle Musterdaten durch Vergleichen des individuellen Maschinenlernmodells mit jedem revidierten kombinierten Maschinenlernmodell und Erzeugen einer neuen Wetterzone basierend auf einer Schwellendifferenz,
wobei, wenn die Differenz in der Vorhersagegenauigkeit kleiner als eine Schwellendifferenz ist, jedes kombinierte Maschinenlernmodell beibehalten wird und die Mehrzahl von individuellen Wetterzonen verworfen wird und der Teilungsfaktor auf der Speicherfaktorwertvariation zwischen jedem kombinierten Maschinenlernmodell basiert und jede individuelle Wetterzone aus der Mehrzahl von Zwischenwetterzonen und der Mehrzahl von letzten Wetterzonen entfernt wird, und
wenn die Differenz in der Vorhersagegenauigkeit größer als die Schwellendifferenz ist, der Teilungsfaktor um eins erhöht wird und wiederholt wird, um die Bereichswerte des Speichers zu unterteilen, der in Kombination und individuellen Wetterzonen unterschiedlich ist.

8. System nach Anspruch 6, wobei das Erzeugen der Mehrzahl von Klassen für jede Wetterzone umfasst:
Abrufen des zulässigen Toleranzwerts aus der vorgespeicherten Datenbank zum Vorhersagen des Qualitätsparameterwerts, der für jedes Lebensmittel in der Lieferkette erforderlich ist;
Erhalten eines Minimalwerts und eines Maximalwerts der Qualitätsparameterwerte von jeder Wetterzone und gleichzeitiges Erhalten des kritischen Qualitätsparameterwerts aus der vorgespeicherten Datenbank;
Berechnen eines neuen Bereichs für den Qualitätsparameterwert durch Einstellen von mindestens einem von (i) dem Minimalwert gleich dem kritischen Qualitätsparameterwert, wenn der Minimalwert größer als der kritische Qualitätsparameterwert ist, und (ii) dem Maximalwert gleich dem kritischen Qualitätsparameterwert, wenn der Maximalwert kleiner als der kritische Qualitätsparameterwert ist;
Erhalten einer Gesamtzahl von Klassen basierend auf der Differenz zwischen dem Maximalwert und dem Minimalwert des Qualitätsparameters mit der zulässigen Toleranz und Abrunden der Gesamtzahl von Klassen auf einen höheren ganzzahligen Wert;
Erhalten einer revidierten zulässigen Toleranz durch Dividieren der Differenz zwischen dem Minimalwert und dem Maximalwert des Qualitätsparameters durch die Gesamtzahl von Klassen;
Erzeugen der Mehrzahl von Klassen durch Verwenden der revidierten zulässigen Toleranz als eine Klassengröße und Auflisten jeder Klasse innerhalb des Bereichs von Qualitätsparameterwerten;
Clustern der kommentierten visuellen Trainingsbilddaten mit Qualitätsparameterwert, der in den gleichen Klassenbereich fällt, in jede Klasse;
Validieren der Mehrzahl von Klassen mit den kommentierten visuellen Trainingsdaten durch Verwenden des Maschinenlernmodells und eine Klassifizierungsgenauigkeit wird bestimmt, wenn das Maschinenlernmodell größer als eine Klassifizierungsschwellengenauigkeit ist; und
Aktualisieren der zulässigen Toleranz durch Multiplizieren der zulässigen Toleranz mit einem Multiplikationsfaktor, wenn das Maschinenlernmodell kleiner als die Klassifizierungsschwellengenauigkeit ist.

9. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:
Erhalten , von einem Benutzer, von Eingabedaten, die visuelle Daten und Speicherdaten umfassen, die jedem Lebensmittel zugeordnet sind, wobei die visuellen Daten Eigenschaften umfassen, die die Frische jedes Lebensmittels anzeigen, wobei die Speicherdaten Werte umfassen, die vom Benutzer spezifiziert werden und die Speicherumgebung jedes Lebensmittels anzeigen, das gespeichert wird; **dadurch gekennzeichnet, dass**:
Bestimmen, unter Verwendung mindestens einer von einer Mehrzahl von Wetterzonen, die in einer Nachschlagetabelle vorkonfiguriert sind, die einem trainierten Qualitätsparametervorhersagemodul (202) zugeordnet ist, eines aktuellen Qualitätsparameterwerts der visuellen Daten durch Abbilden des Speicherdatenwerts der Eingabedaten auf die Speicherdatenwerte, die jeder Wetterzone zugeordnet sind, wobei das Trainieren des Qualitätsparametervorhersagemoduls (202) umfasst:
Aufzeichnen einer Mehrzahl von sensorischen Signalen, die von einer Mehrzahl von Sensoren jedes Lebensmittels in Zeitreihen erhalten werden, wobei jedes Lebensmittel bei einer Mehrzahl von Speicherfaktoren gespeichert wird, die eine Temperatur, eine Lichtintensität, eine relative Feuchtigkeit, eine Konzentration von Gasen und eine Luftströmungsgeschwindigkeit umfassen, und wobei jeder Speicherfaktor einen oder mehrere Werte in regelmäßigen Intervallen in einem Bereich umfasst;
Erhalten, in regelmäßigen Intervallen, der Mehrzahl von sensorischen Signalen jedes Lebensmittels, die eine Mehrzahl von visuellen Trainingsdaten bei der Mehrzahl von Speicherfaktoren umfassen, und des Qualitätsparameterwerts, der für die Mehrzahl von visuellen Trainingsdaten gemessen wird, der die Frische jedes Lebensmittels anzeigt, die vom Benutzer in einer Lieferkette spezifiziert wird;
Erzeugen der Mehrzahl von Wetterzonen jedes Lebensmittels unter Verwendung der Mehrzahl von sensorischen Signalen, wobei jede Wetterzone annotierte visuelle Trainingsdaten mit entsprechendem Qualitätsparameterwert bei der Mehrzahl von Speicherfaktorwerten beinhaltet; und
Vorhersagen unter Verwendung eines Haltbarkeitsvorhersagemoduls (204) einer Haltbarkeit für die visuellen Daten, die den Eingabedaten zugeordnet sind, unter Verwendung des aktuellen Qualitätsparameterwerts, eines kritischen Qualitätsparameterwerts und der Speicherdaten.

10. Ein oder mehrere nichtflüchtige maschinenlesbare Informationsspeichermedien nach Anspruch 9, wobei das Trainieren des Qualitätsparametervorhersagemoduls ferner umfasst:
Konstruieren der Nachschlagetabelle durch Extrahieren eines oder mehrerer identischer Speicherfaktorbereichswerte aus der Mehrzahl von Wetterzonen und Speichern jedes identischen Speicherfaktorbereichswerts in jedem Cluster; und
Erzeugen einer Mehrzahl von Klassen für jede Wetterzone, die der Nachschlagetabelle zugeordnet ist, wobei jede Klasse einen Qualitätsparameterbereichswert aufweist, der basierend auf einem zulässigen Toleranzwert zum Vorhersagen des Qualitätsparameterwerts und einer Vorhersagegenauigkeit des Qualitätsparameterwerts jeder visuellen Daten identifiziert wird, wobei das Haltbarkeitsvorhersagemodul (204) die Daten des relevanten Qualitätsparameters, der Vitamin C, den Antioxidationsmittelgehalt, geometrische Abmessungen, Feuchtigkeitsgehalt, Kohlenhydrate, Protein, Fett und davon umfasst, im Verhältnis zur Zeit für jeden Speicherfaktor, der zu der Mehrzahl von Wetterzonen gehört, in einen Trainingsdatensatz und einen Testdatensatz mit einem Verhältnis von 80:20 unterteilt;
Erzeugen eines Satzes von mathematischen Gleichungen, die den Qualitätsparameterwert mit der Zeit und Speicherfaktoren korrelieren, die die Temperatur, relative Feuchtigkeit, Konzentration von Gasen, Luftströmungsgeschwindigkeit umfassen, wobei der Satz von mathematischen Gleichungen aus der Arrhenius-Form der Gleichung abgeleitet wird, wobei die Abhängigkeit des Qualitätsparameters von der Zeit linear ist und die Abhängigkeit von Speicherfaktoren exponentiell ist und wobei die Abhängigkeit der Qualitätszeit von den Speicherfaktoren unabhängig oder gekoppelt ist.

11. Ein oder mehrere nichtflüchtige maschinenlesbare Informationsspeichermedien nach Anspruch 9, wobei das Erzeugen der Mehrzahl von Wetterzonen jedes Lebensmittels bei der Mehrzahl von Speicherfaktoren umfasst:
Abrufen der Mehrzahl von Speicherfaktorbereichswerten jedes Lebensmittels, die während der Mehrzahl von Lebenszyklusphasen gespeichert werden, aus einer vorgespeicherten Datenbank;
Unterteilen jedes Speicherfaktorbereichswerts in einen ersten Satz und einen zweiten Satz unter Verwendung eines Teilungsfaktorwerts;
Erzeugen einer ersten Wetterzone durch Kombinieren des ersten Satzes von Speicherfaktorbereichswerten, die basierend auf dem Teilungsfaktorwert unterteilt werden;
Erzeugen einer Mehrzahl von Zwischenwetterzonen, die die erste Wetterzone ausschließen, durch Ersetzen jedes Speicherfaktorbereichswerts der ersten Wetterzone durch nächste verfügbare Speicherfaktorbereichswerte, die nach dem Teilungsfaktorwert erhalten werden;
Erzeugen einer Mehrzahl von letzten Wetterzonen unter Verwendung aller Kombinationen von Speicherfaktorbereichswerten, die den ersten Satz aller Speicherfaktorbereichswerte ausschließen;
Sammeln jeder visuellen Trainingsdaten mit entsprechendem Qualitätsparameterwert in Zeitreihen bei der Mehrzahl von Speicherfaktorwerten für jede Wetterzone;
iteratives Durchführen, um die Vorhersagegenauigkeit für die Mehrzahl von visuellen Trainingsdaten mit entsprechendem Qualitätsparameter zu bewerten, durch
Konstruieren eines individuellen Maschinenlernmodells für die erste Wetterzone basierend auf den visuellen Trainingsdaten, die mit entsprechendem Qualitätsparameterwert kommentiert sind;
Konstruieren einer Mehrzahl von kombinierten Maschinenlernmodellen durch Kombinieren der kommentierten visuellen Trainingsdaten mit entsprechendem Qualitätsparameterwert der ersten Wetterzone mit nachfolgenden Daten der verfügbaren Wetterzone; und
Bewerten der Vorhersagegenauigkeit für visuelle Musterdaten durch Vergleichen des individuellen Maschinenlernmodells mit jedem revidierten kombinierten Maschinenlernmodell und Erzeugen einer neuen Wetterzone basierend auf einer Schwellendifferenz,
wobei, wenn die Differenz in der Vorhersagegenauigkeit kleiner als eine Schwellendifferenz ist, jedes kombinierte Maschinenlernmodell beibehalten wird und die Mehrzahl von individuellen Wetterzonen verworfen wird und die Teilung des Bereichs von Werten basierend auf der Speicherfaktorvariation zwischen jedem kombinierten Maschinenlernmodell und jeder individuellen Wetterzone aus der Mehrzahl von Zwischenwetterzonen und der Mehrzahl von letzten Wetterzonen entfernt wird, und
wenn die Differenz in der Vorhersagegenauigkeit größer als die Schwellendifferenz ist, der Teilungsfaktor um eins erhöht wird und wiederholt wird, um die Bereichswerte des Speichers zu unterteilen, der in Kombination und individuellen Wetterzonen unterschiedlich ist.

12. Ein oder mehrere nichtflüchtige maschinenlesbare Informationsspeichermedien nach Anspruch 10, wobei das Erzeugen der Mehrzahl von Klassen für jede Wetterzone umfasst:
Abrufen des zulässigen Toleranzwerts aus der vorgespeicherten Datenbank zum Vorhersagen des Qualitätsparameterwerts, der für jedes Lebensmittel in der Lieferkette erforderlich ist;
Erhalten eines Minimalwerts und eines Maximalwerts der Qualitätsparameterwerte von jeder Wetterzone und gleichzeitiges Erhalten des kritischen Qualitätsparameterwerts aus der vorgespeicherten Datenbank;
Berechnen eines neuen Bereichs für den Qualitätsparameterwert durch Einstellen von mindestens einem von (i) dem Minimalwert gleich dem kritischen Qualitätsparameterwert, wenn der Minimalwert größer als der kritische Qualitätsparameterwert ist, und (ii) dem Maximalwert gleich dem kritischen Qualitätsparameterwert, wenn der Maximalwert kleiner als der kritische Qualitätsparameterwert ist;
Erhalten einer Gesamtzahl von Klassen basierend auf der Differenz zwischen dem Maximalwert und dem Minimalwert des Qualitätsparameters mit der zulässigen Toleranz und Abrunden der Gesamtzahl von Klassen auf einen höheren ganzzahligen Wert;
Erhalten einer revidierten zulässigen Toleranz durch Dividieren der Differenz zwischen dem Minimalwert und dem Maximalwert des Qualitätsparameters durch die Gesamtzahl von Klassen;
Erzeugen der Mehrzahl von Klassen durch Verwenden der revidierten zulässigen Toleranz als eine Klassengröße und Auflisten jeder Klasse innerhalb des Bereichs von Qualitätsparameterwerten;
Clustern der kommentierten visuellen Trainingsbilddaten mit Qualitätsparameterwert, der in den gleichen Klassenbereich fällt, in jede Klasse;
Validieren der Mehrzahl von Klassen mit den kommentierten visuellen Trainingsdaten durch Verwenden des Maschinenlernmodells und eine Klassifizierungsgenauigkeit wird bestimmt, wenn das Maschinenlernmodell größer als eine Klassifizierungsschwellengenauigkeit ist; und
Aktualisieren der zulässigen Toleranz durch Multiplizieren der zulässigen Toleranz mit einem Multiplikationsfaktor, wenn das Maschinenlernmodell kleiner als die Klassifizierungsschwellengenauigkeit ist.

## Revendications

1. Procédé mis en œuvre par processeur (300) pour prédire la durée de conservation d'aliments périssables, le procédé comprenant :
l'obtention (302), à partir d'un utilisateur via un ou plusieurs processeurs matériels (104), de données d'entrée comprenant des données visuelles et des données de stockage associées à chaque aliment, dans lequel les données visuelles comprennent des caractéristiques indicatives de la fraîcheur de chaque aliment, dans lequel les données de stockage comprennent des valeurs spécifiées par l'utilisateur indiquant un environnement de stockage de chaque aliment stocké ; **caractérisé en ce que** :
la détermination (304), via les un ou plusieurs processeurs matériels (104), en utilisant au moins l'une d'une pluralité de zones météorologiques qui sont préconfigurées dans une table de consultation associée à un module de prédiction de paramètre de qualité entraîné (202), d'une valeur de paramètre de qualité actuelle des données visuelles en mettant en correspondance la valeur de données de stockage des données d'entrée avec les valeurs de données de stockage associées dans chaque zone météorologique, dans lequel l'entraînement du module de prédiction de paramètre de qualité (202) comprend :
l'enregistrement d'une pluralité de signaux de capteurs obtenus à partir d'une pluralité de capteurs de chaque aliment en série temporelle, dans lequel chaque aliment est stocké selon une pluralité de facteurs de stockage comprenant une température, une intensité lumineuse, une humidité relative, une concentration de gaz, et une vitesse d'écoulement d'air, et dans lequel chaque facteur de stockage comprend une ou plusieurs valeurs à intervalle(s) régulier(s) dans une plage ;
l'obtention à intervalle(s) régulier(s) de la pluralité de signaux de capteurs de chaque aliment comprenant une pluralité de données visuelles d'entraînement à la pluralité de facteurs de stockage, et la valeur de paramètre de qualité mesurée pour la pluralité de données visuelles d'entraînement qui indique la fraîcheur de chaque aliment spécifiée par l'utilisateur dans une chaîne d'approvisionnement ;
la génération de la pluralité de zones météorologiques de chaque aliment en utilisant la pluralité de signaux de capteurs, dans lequel chaque zone météorologique comprend des données visuelles d'entraînement annotées avec une valeur de paramètre de qualité correspondante à la pluralité de valeurs de facteurs de stockage ; et
la prédiction (306), en utilisant un module de prédiction de durée de conservation (204) via les un ou plusieurs processeurs matériels (104), d'une durée de conservation pour les données visuelles associées aux données d'entrée en utilisant la valeur de paramètre de qualité actuelle, une valeur de paramètre de qualité critique, et les données de stockage, dans lequel le module de prédiction de durée de conservation (204) divise les données de paramètres de qualité pertinents comprenant la vitamine C, la teneur en antioxydants, les dimensions géométriques, la teneur en humidité, les glucides, les protéines, les graisses, et leur variation en fonction du temps pour chaque facteur de stockage appartenant à la pluralité de zones météorologiques en un ensemble de données d'entraînement et un ensemble de données de test ayant un rapport de 80:20 ;
la génération d'un ensemble d'équations mathématiques qui corrèle la valeur de paramètre de qualité avec le temps et des facteurs de stockage comprenant la température, l'humidité relative, la concentration de gaz, la vitesse d'écoulement d'air, dans lequel l'ensemble d'équations mathématiques est dérivé de la forme d'équation d'Arrhenius où la dépendance du paramètre de qualité au temps est linéaire et la dépendance aux facteurs de stockage est exponentielle et dans lequel la dépendance du temps de qualité aux facteurs de stockage est indépendante ou couplée.

2. Procédé mis en œuvre par processeur selon la revendication 1, dans lequel l'entraînement du module de prédiction de paramètre de qualité comprend en outre :
la construction de la table de consultation en extrayant une ou plusieurs valeurs de plage de facteurs de stockage identiques de la pluralité de zones météorologiques et en stockant chaque valeur de plage de facteurs de stockage identique dans chaque groupe ; et
la génération d'une pluralité de classes pour chaque zone météorologique associée à la table de consultation, où chaque classe a des valeurs de plage de paramètres de qualité identifiées sur la base d'une valeur de tolérance admissible pour prédire la valeur de paramètre de qualité et une précision de prédiction de la valeur de paramètre de qualité de chaque donnée visuelle.

3. Procédé mis en œuvre par processeur selon la revendication 1, dans lequel la génération de la pluralité de zones météorologiques de chaque aliment à la pluralité de facteurs de stockage comprend :
l'extraction à partir d'une base de données préstockée de la pluralité de valeurs de plage de facteurs de stockage de chaque aliment stocké pendant la pluralité d'étapes de cycle de vie ;
la division de chaque valeur de plage de facteurs de stockage en un premier ensemble et un second ensemble en utilisant une valeur de facteur de division ;
la génération d'une première zone météorologique en combinant le premier ensemble de valeurs de plage de facteurs de stockage divisées sur la base de la valeur de facteur de division ;
la génération d'une pluralité de zones météorologiques intermédiaires excluant la première zone météorologique en substituant chaque valeur de plage de facteurs de stockage de la première zone météorologique aux valeurs de plage de facteurs de stockage disponibles suivantes obtenues après la valeur de facteur de division ;
la génération d'une pluralité de zones météorologiques finales en utilisant toute la combinaison de valeurs de plage de facteurs de stockage excluant le premier ensemble de toutes les valeurs de plage de facteurs de stockage ;
la collecte de chaque donnée visuelle d'entraînement avec une valeur de paramètre de qualité correspondante en série temporelle à la pluralité de valeurs de facteurs de stockage pour chaque zone météorologique ;
l'exécution itérative, pour évaluer la précision de prédiction pour la pluralité de données visuelles d'entraînement avec un paramètre de qualité correspondant par,
la construction d'un modèle d'apprentissage automatique individuel pour la première zone météorologique sur la base des données visuelles d'entraînement annotées avec une valeur de paramètre de qualité correspondante ;
la construction d'une pluralité de modèles d'apprentissage automatique combinés, en combinant les données visuelles d'entraînement annotées avec une valeur de paramètre de qualité correspondante de la première zone météorologique avec des données ultérieures de la zone météorologique disponible ; et
l'évaluation de la précision de prédiction pour un échantillon de données visuelles, en comparant le modèle d'apprentissage automatique individuel avec chaque modèle d'apprentissage automatique combiné révisé et la génération d'une nouvelle zone météorologique sur la base d'une différence de seuil,
dans lequel si la différence dans la précision de prédiction est inférieure à une différence de seuil, conserver chaque modèle d'apprentissage automatique combiné, et rejeter la pluralité de zones météorologiques individuelles, et les divisions de plages de valeurs sur la base de la variation de facteur de stockage entre chaque modèle d'apprentissage automatique combiné et chaque zone météorologique individuelle sont supprimées de la pluralité de zones météorologiques intermédiaires et de la pluralité de zones météorologiques finales, et
si la différence dans la précision de prédiction est supérieure à la différence de seuil, le facteur de division est incrémenté de un et répété pour diviser les plages de valeurs de stockage qui sont différentes en combinaison et en zones météorologiques individuelles.

4. Procédé mis en œuvre par processeur selon la revendication 2, dans lequel la génération de la pluralité de classes pour chaque zone météorologique comprend :
l'extraction à partir de la base de données préstockée de la valeur de tolérance admissible pour prédire la valeur de paramètre de qualité requise pour chaque aliment dans la chaîne d'approvisionnement ;
l'obtention d'une valeur minimale et d'une valeur maximale des valeurs de paramètre de qualité à partir de chaque zone météorologique, et l'obtention simultanée de la valeur de paramètre de qualité critique à partir de la base de données préstockée ;
le calcul d'une nouvelle plage pour la valeur de paramètre de qualité en réglant au moins l'un parmi (i) la valeur minimale égale à la valeur de paramètre de qualité critique lorsque la valeur minimale est supérieure à la valeur de paramètre de qualité critique, et (ii) la valeur maximale égale à la valeur de paramètre de qualité critique lorsque la valeur maximale est inférieure à la valeur de paramètre de qualité critique ;
l'obtention d'un nombre total de classes sur la base de la différence entre la valeur maximale et la valeur minimale du paramètre de qualité et de la tolérance admissible, et l'arrondissement du nombre total de classes à une valeur entière supérieure ;
l'obtention d'une tolérance admissible révisée en divisant la différence entre la valeur minimale et la valeur maximale du paramètre de qualité par le nombre total de classes ;
la génération de la pluralité de classes en utilisant la tolérance admissible révisée en tant que taille de classe, et la liste de chaque classe dans la plage de valeurs de paramètre de qualité ;
le regroupement des données d'image visuelle d'entraînement annotées dont la valeur de paramètre de qualité se situe dans la même plage de classe dans chaque classe ;
la validation de la pluralité de classes ayant les données visuelles d'entraînement annotées en utilisant le modèle d'apprentissage automatique et une précision de classification est déterminée lorsque la précision du modèle d'apprentissage automatique est supérieure à une précision de seuil de classification ; et
la mise à jour de la tolérance admissible en multipliant la tolérance admissible par un facteur de multiplication lorsque la précision du modèle d'apprentissage automatique est inférieure à la précision de seuil de classification.

5. Système (100) pour prédire la durée de conservation d'aliments périssables comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
obtenir, à partir d'un utilisateur, des données d'entrée comprenant des données visuelles et des données de stockage associées à chaque aliment, dans lequel les données visuelles comprennent des caractéristiques indicatives de la fraîcheur de chaque aliment, dans lequel les données de stockage comprennent des valeurs spécifiées par l'utilisateur indiquant un environnement de stockage de chaque aliment stocké ; **caractérisé en ce que** :
déterminer, en utilisant au moins l'une d'une pluralité de zones météorologiques qui sont préconfigurées dans une table de consultation associée à un module de prédiction de paramètre de qualité entraîné (202), une valeur de paramètre de qualité actuelle des données visuelles en mettant en correspondance la valeur de données de stockage des données d'entrée avec les valeurs de données de stockage associées dans chaque zone météorologique, dans lequel l'entraînement du module de prédiction de paramètre de qualité (202) comprend :
l'enregistrement d'une pluralité de signaux de capteurs obtenus à partir d'une pluralité de capteurs de chaque aliment en série temporelle, dans lequel chaque aliment est stocké selon une pluralité de facteurs de stockage comprenant une température, une intensité lumineuse, une humidité relative, une concentration de gaz, et une vitesse d'écoulement d'air, et dans lequel chaque facteur de stockage comprend une ou plusieurs valeurs à intervalle(s) régulier(s) dans une plage ;
l'obtention à intervalle(s) régulier(s) de la pluralité de signaux de capteurs de chaque aliment comprenant une pluralité de données visuelles d'entraînement à la pluralité de facteurs de stockage, et la valeur de paramètre de qualité mesurée pour la pluralité de données visuelles d'entraînement qui indique la fraîcheur de chaque aliment spécifiée par l'utilisateur dans une chaîne d'approvisionnement ;
la génération de la pluralité de zones météorologiques de chaque aliment en utilisant la pluralité de signaux de capteurs, dans lequel chaque zone météorologique comprend des données visuelles d'entraînement annotées avec une valeur de paramètre de qualité correspondante à la pluralité de valeurs de facteurs de stockage ; et
la prédiction, en utilisant un module de prédiction de durée de conservation (204), d'une durée de conservation pour les données visuelles associées aux données d'entrée en utilisant la valeur de paramètre de qualité actuelle, une valeur de paramètre de qualité critique, et les données de stockage, dans lequel le module de prédiction de durée de conservation (204) divise les données de paramètres de qualité pertinents comprenant la vitamine C, la teneur en antioxydants, les dimensions géométriques, la teneur en humidité, les glucides, les protéines, les graisses, et leur variation en fonction du temps pour chaque facteur de stockage appartenant à la pluralité de zones météorologiques en un ensemble de données d'entraînement et un ensemble de données de test ayant un rapport de 80:20 ;
la génération d'un ensemble d'équations mathématiques qui corrèle la valeur de paramètre de qualité avec le temps et des facteurs de stockage comprenant la température, l'humidité relative, la concentration de gaz, la vitesse d'écoulement d'air, dans lequel l'ensemble d'équations mathématiques est dérivé de la forme d'équation d'Arrhenius où la dépendance du paramètre de qualité au temps est linéaire et la dépendance aux facteurs de stockage est exponentielle et dans lequel la dépendance du temps de qualité aux facteurs de stockage est indépendante ou couplée.

6. Système selon la revendication 5, dans lequel l'entraînement du module de prédiction de paramètre de qualité comprend en outre :
la construction de la table de consultation en extrayant une ou plusieurs valeurs de plage de facteurs de stockage identiques de la pluralité de zones météorologiques et en stockant chaque valeur de plage de facteurs de stockage identique dans chaque groupe ; et
la génération d'une pluralité de classes pour chaque zone météorologique associée à la table de consultation, où chaque classe a des valeurs de plage de paramètres de qualité identifiées sur la base d'une valeur de tolérance admissible pour prédire la valeur de paramètre de qualité et une précision de prédiction de la valeur de paramètre de qualité de chaque donnée visuelle.

7. Système (100) selon la revendication 5, dans lequel la génération de la pluralité de zones météorologiques de chaque aliment à la pluralité de facteurs de stockage comprend :
l'extraction à partir d'une base de données préstockée de la pluralité de valeurs de plage de facteurs de stockage de chaque aliment stocké pendant la pluralité d'étapes de cycle de vie ;
la division de chaque valeur de plage de facteurs de stockage en un premier ensemble et un second ensemble en utilisant une valeur de facteur de division ;
la génération d'une première zone météorologique en combinant le premier ensemble de valeurs de plage de facteurs de stockage divisées sur la base de la valeur de facteur de division ;
la génération d'une pluralité de zones météorologiques intermédiaires excluant la première zone météorologique en substituant chaque valeur de plage de facteurs de stockage de la première zone météorologique aux valeurs de plage de facteurs de stockage disponibles suivantes obtenues après la valeur de facteur de division ;
la génération d'une pluralité de zones météorologiques finales en utilisant toute la combinaison de valeurs de plage de facteurs de stockage excluant le premier ensemble de toutes les valeurs de plage de facteurs de stockage ;
la collecte de chaque donnée visuelle d'entraînement avec une valeur de paramètre de qualité correspondante en série temporelle à la pluralité de valeurs de facteurs de stockage pour chaque zone météorologique ;
l'exécution itérative, pour évaluer la précision de prédiction pour la pluralité de données visuelles d'entraînement avec un paramètre de qualité correspondant par,
la construction d'un modèle d'apprentissage automatique individuel pour la première zone météorologique sur la base des données visuelles d'entraînement annotées avec une valeur de paramètre de qualité correspondante ;
la construction d'une pluralité de modèles d'apprentissage automatique combinés, en combinant les données visuelles d'entraînement annotées avec une valeur de paramètre de qualité correspondante de la première zone météorologique avec des données ultérieures de la zone météorologique disponible ; et
l'évaluation de la précision de prédiction pour un échantillon de données visuelles, en comparant le modèle d'apprentissage automatique individuel avec chaque modèle d'apprentissage automatique combiné révisé et la génération d'une nouvelle zone météorologique sur la base d'une différence de seuil,
dans lequel si la différence dans la précision de prédiction est inférieure à une différence de seuil, conserver chaque modèle d'apprentissage automatique combiné, et rejeter la pluralité de zones météorologiques individuelles, et les divisions de plages de valeurs basées sur la variation de valeur de facteur de stockage entre chaque modèle d'apprentissage automatique combiné et chaque zone météorologique individuelle sont supprimées de la pluralité de zones météorologiques intermédiaires et de la pluralité de zones météorologiques finales, et
si la différence dans la précision de prédiction est supérieure à la différence de seuil, le facteur de division est incrémenté de un et répété pour diviser les plages de valeurs de stockage qui sont différentes en combinaison et en zones météorologiques individuelles.

8. Système selon la revendication 6, dans lequel la génération de la pluralité de classes pour chaque zone météorologique comprend :
l'extraction à partir de la base de données préstockée de la valeur de tolérance admissible pour prédire la valeur de paramètre de qualité requise pour chaque aliment dans la chaîne d'approvisionnement ;
l'obtention d'une valeur minimale et d'une valeur maximale des valeurs de paramètre de qualité à partir de chaque zone météorologique, et l'obtention simultanée de la valeur de paramètre de qualité critique à partir de la base de données préstockée ;
le calcul d'une nouvelle plage pour la valeur de paramètre de qualité en réglant au moins l'un parmi (i) la valeur minimale égale à la valeur de paramètre de qualité critique lorsque la valeur minimale est supérieure à la valeur de paramètre de qualité critique, et (ii) la valeur maximale égale à la valeur de paramètre de qualité critique lorsque la valeur maximale est inférieure à la valeur de paramètre de qualité critique ;
l'obtention d'un nombre total de classes sur la base de la différence entre la valeur maximale et la valeur minimale du paramètre de qualité et de la tolérance admissible, et l'arrondissement du nombre total de classes à une valeur entière supérieure ;
l'obtention d'une tolérance admissible révisée en divisant la différence entre la valeur minimale et la valeur maximale du paramètre de qualité par le nombre total de classes ;
la génération de la pluralité de classes en utilisant la tolérance admissible révisée en tant que taille de classe, et la liste de chaque classe dans la plage de valeurs de paramètre de qualité ;
le regroupement des données d'image visuelle d'entraînement annotées dont la valeur de paramètre de qualité se situe dans la même plage de classe dans chaque classe ;
la validation de la pluralité de classes ayant les données visuelles d'entraînement annotées en utilisant le modèle d'apprentissage automatique et une précision de classification est déterminée lorsque la précision du modèle d'apprentissage automatique est supérieure à une précision de seuil de classification ; et
la mise à jour de la tolérance admissible en multipliant la tolérance admissible par un facteur de multiplication lorsque la précision du modèle d'apprentissage automatique est inférieure à la précision de seuil de classification.

9. Un ou plusieurs supports de stockage d'informations lisibles par machine non transitoires comprenant une ou plusieurs instructions qui, lorsqu'elles sont exécutées par un ou plusieurs processeurs matériels, amènent :
l'obtention, à partir d'un utilisateur, de données d'entrée comprenant des données visuelles et des données de stockage associées à chaque aliment, dans lequel les données visuelles comprennent des caractéristiques indicatives de la fraîcheur de chaque aliment, dans lequel les données de stockage comprennent des valeurs spécifiées par l'utilisateur indiquant un environnement de stockage de chaque aliment stocké ; **caractérisé en ce que** :
la détermination, en utilisant au moins l'une d'une pluralité de zones météorologiques qui sont préconfigurées dans une table de consultation associée à un module de prédiction de paramètre de qualité entraîné (202), d'une valeur de paramètre de qualité actuelle des données visuelles en mettant en correspondance la valeur de données de stockage des données d'entrée avec les valeurs de données de stockage associées dans chaque zone météorologique, dans lequel l'entraînement du module de prédiction de paramètre de qualité (202) comprend :
l'enregistrement d'une pluralité de signaux de capteurs obtenus à partir d'une pluralité de capteurs de chaque aliment en série temporelle, dans lequel chaque aliment est stocké selon une pluralité de facteurs de stockage comprenant une température, une intensité lumineuse, une humidité relative, une concentration de gaz, et une vitesse d'écoulement d'air, et dans lequel chaque facteur de stockage comprend une ou plusieurs valeurs à intervalle(s) régulier(s) dans une plage ;
l'obtention à intervalle(s) régulier(s) de la pluralité de signaux de capteurs de chaque aliment comprenant une pluralité de données visuelles d'entraînement à la pluralité de facteurs de stockage, et la valeur de paramètre de qualité mesurée pour la pluralité de données visuelles d'entraînement qui indique la fraîcheur de chaque aliment spécifiée par l'utilisateur dans une chaîne d'approvisionnement ;
la génération de la pluralité de zones météorologiques de chaque aliment en utilisant la pluralité de signaux de capteurs, dans lequel chaque zone météorologique comprend des données visuelles d'entraînement annotées avec une valeur de paramètre de qualité correspondante à la pluralité de valeurs de facteurs de stockage ; et
la prédiction, en utilisant un module de prédiction de durée de conservation (204), d'une durée de conservation pour les données visuelles associées aux données d'entrée en utilisant la valeur de paramètre de qualité actuelle, une valeur de paramètre de qualité critique, et les données de stockage.

10. Un ou plusieurs supports de stockage d'informations lisibles par machine non transitoires selon la revendication 9, dans lequel l'entraînement du module de prédiction de paramètre de qualité comprend en outre :
la construction de la table de consultation en extrayant une ou plusieurs valeurs de plage de facteurs de stockage identiques de la pluralité de zones météorologiques et en stockant chaque valeur de plage de facteurs de stockage identique dans chaque groupe ; et
la génération d'une pluralité de classes pour chaque zone météorologique associée à la table de consultation, où chaque classe a des valeurs de plage de paramètres de qualité identifiées sur la base d'une valeur de tolérance admissible pour prédire la valeur de paramètre de qualité et une précision de prédiction de la valeur de paramètre de qualité de chaque donnée visuelle, dans lequel le module de prédiction de durée de conservation (204) divise les données de paramètres de qualité pertinents comprenant la vitamine C, la teneur en antioxydants, les dimensions géométriques, la teneur en humidité, les glucides, les protéines, les graisses, et leur variation en fonction du temps pour chaque facteur de stockage appartenant à la pluralité de zones météorologiques en un ensemble de données d'entraînement et un ensemble de données de test ayant un rapport de 80:20 ;
la génération d'un ensemble d'équations mathématiques qui corrèle la valeur de paramètre de qualité avec le temps et des facteurs de stockage comprenant la température, l'humidité relative, la concentration de gaz, la vitesse d'écoulement d'air, dans lequel l'ensemble d'équations mathématiques est dérivé de la forme d'équation d'Arrhenius où la dépendance du paramètre de qualité au temps est linéaire et la dépendance aux facteurs de stockage est exponentielle et dans lequel la dépendance du temps de qualité aux facteurs de stockage est indépendante ou couplée.

11. Un ou plusieurs supports de stockage d'informations lisibles par machine non transitoires selon la revendication 9, dans lequel la génération de la pluralité de zones météorologiques de chaque aliment à la pluralité de facteurs de stockage comprend :
l'extraction à partir d'une base de données préstockée de la pluralité de valeurs de plage de facteurs de stockage de chaque aliment stocké pendant la pluralité d'étapes de cycle de vie ;
la division de chaque valeur de plage de facteurs de stockage en un premier ensemble et un second ensemble en utilisant une valeur de facteur de division ;
la génération d'une première zone météorologique en combinant le premier ensemble de valeurs de plage de facteurs de stockage divisées sur la base de la valeur de facteur de division ;
la génération d'une pluralité de zones météorologiques intermédiaires excluant la première zone météorologique en substituant chaque valeur de plage de facteurs de stockage de la première zone météorologique aux valeurs de plage de facteurs de stockage disponibles suivantes obtenues après la valeur de facteur de division ;
la génération d'une pluralité de zones météorologiques finales en utilisant toute la combinaison de valeurs de plage de facteurs de stockage excluant le premier ensemble de toutes les valeurs de plage de facteurs de stockage ;
la collecte de chaque donnée visuelle d'entraînement avec une valeur de paramètre de qualité correspondante en série temporelle à la pluralité de valeurs de facteurs de stockage pour chaque zone météorologique ;
l'exécution itérative, pour évaluer la précision de prédiction pour la pluralité de données visuelles d'entraînement avec un paramètre de qualité correspondant par,
la construction d'un modèle d'apprentissage automatique individuel pour la première zone météorologique sur la base des données visuelles d'entraînement annotées avec une valeur de paramètre de qualité correspondante ;
la construction d'une pluralité de modèles d'apprentissage automatique combinés, en combinant les données visuelles d'entraînement annotées avec une valeur de paramètre de qualité correspondante de la première zone météorologique avec des données ultérieures de la zone météorologique disponible ; et
l'évaluation de la précision de prédiction pour un échantillon de données visuelles, en comparant le modèle d'apprentissage automatique individuel avec chaque modèle d'apprentissage automatique combiné révisé et la génération d'une nouvelle zone météorologique sur la base d'une différence de seuil,
dans lequel si la différence dans la précision de prédiction est inférieure à une différence de seuil, conserver chaque modèle d'apprentissage automatique combiné, et rejeter la pluralité de zones météorologiques individuelles, et les divisions de plages de valeurs sur la base de la variation de facteur de stockage entre chaque modèle d'apprentissage automatique combiné et chaque zone météorologique individuelle sont supprimées de la pluralité de zones météorologiques intermédiaires et de la pluralité de zones météorologiques finales, et
si la différence dans la précision de prédiction est supérieure à la différence de seuil, le facteur de division est incrémenté de un et répété pour diviser les plages de valeurs de stockage qui sont différentes en combinaison et en zones météorologiques individuelles.

12. Un ou plusieurs supports de stockage d'informations lisibles par machine non transitoires selon la revendication 10, dans lequel la génération de la pluralité de classes pour chaque zone météorologique comprend :
l'extraction à partir de la base de données préstockée de la valeur de tolérance admissible pour prédire la valeur de paramètre de qualité requise pour chaque aliment dans la chaîne d'approvisionnement ;
l'obtention d'une valeur minimale et d'une valeur maximale des valeurs de paramètre de qualité à partir de chaque zone météorologique, et l'obtention simultanée de la valeur de paramètre de qualité critique à partir de la base de données préstockée ;
le calcul d'une nouvelle plage pour la valeur de paramètre de qualité en réglant au moins l'un parmi (i) la valeur minimale égale à la valeur de paramètre de qualité critique lorsque la valeur minimale est supérieure à la valeur de paramètre de qualité critique, et (ii) la valeur maximale égale à la valeur de paramètre de qualité critique lorsque la valeur maximale est inférieure à la valeur de paramètre de qualité critique ;
l'obtention d'un nombre total de classes sur la base de la différence entre la valeur maximale et la valeur minimale du paramètre de qualité et de la tolérance admissible, et l'arrondissement du nombre total de classes à une valeur entière supérieure ;
l'obtention d'une tolérance admissible révisée en divisant la différence entre la valeur minimale et la valeur maximale du paramètre de qualité par le nombre total de classes ;
la génération de la pluralité de classes en utilisant la tolérance admissible révisée en tant que taille de classe, et la liste de chaque classe dans la plage de valeurs de paramètre de qualité ;
le regroupement des données d'image visuelle d'entraînement annotées dont la valeur de paramètre de qualité se situe dans la même plage de classe dans chaque classe ;
la validation de la pluralité de classes ayant les données visuelles d'entraînement annotées en utilisant le modèle d'apprentissage automatique et une précision de classification est déterminée lorsque la précision du modèle d'apprentissage automatique est supérieure à une précision de seuil de classification ; et
la mise à jour de la tolérance admissible en multipliant la tolérance admissible par un facteur de multiplication lorsque la précision du modèle d'apprentissage automatique est inférieure à la précision de seuil de classification.
